(19)

**Europäisches Patentamt**
**European Patent Office**
**Office européen des brevets**

(11)  **EP 4 269 498 B1**

(12)  **EUROPEAN PATENT SPECIFICATION**

(45) Date of publication and mention
of the grant of the patent:
**12.03.2025   Bulletin 2025/11**

(21) Application number: **22170829.0**

(22) Date of filing: **29.04.2022**

(51) International Patent Classification (IPC):
**C08L 23/12** *(2006.01)*      **C08J 5/18** *(2006.01)*

(52) Cooperative Patent Classification (CPC):
(C-Sets available)
**C08L 23/12; C08J 5/18;** C08J 2323/12;
C08J 2423/04; C08J 2423/16; C08L 2207/20

(Cont.)

(54) **A FLEXIBLE MIXED-PLASTIC POLYPROPYLENE BLEND (PP-FLEX)**

FLEXIBLER MISCHKUNSTSTOFF AUS POLYPROPYLEN (PP-FLEX)

MÉLANGE DE POLYPROPYLÈNE MIXTE-PLASTIQUE FLEXIBLE (PP-FLEX)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.11.2023   Bulletin 2023/44**

(73) Proprietor: **Borealis AG**
**1020 Vienna (AT)**

(72) Inventors:
• **DUSCHER, Bernadette**
**4021 Linz (AT)**
• **NUMMILA-PAKARINEN, Auli**
**06850 Kullo (FI)**
• **NIEDERSUESS, Peter**
**4021 Linz (AT)**

• **BERTHELIER, Anthony**
**92400 Courbevoie (FR)**
• **NAGL, Andreas**
**4021 Linz (AT)**
• **GOETZLOFF, Christian**
**4021 Linz (AT)**
• **LIU, Yi**
**4021 Linz (AT)**

(74) Representative: **Maiwald GmbH**
**Elisenhof**
**Elisenstraße 3**
**80335 München (DE)**

(56) References cited:
**EP-A1- 3 919 736      WO-A1-2022/034125**
**US-A- 5 767 230**

(52) Cooperative Patent Classification (CPC): (Cont.)

C-Sets
**C08L 23/12, C08L 23/16, C08L 23/04**

**Description**

**Field of the Invention**

The present invention relates to a flexible mixed-plastic polypropylene blend as typically originating from recyclates.

**Background**

Polyolefins, in particular polyethylene and polypropylene, are increasingly consumed in large amounts in a wide range of applications, including packaging for food and other goods, fibres, automotive components, and a great variety of manufactured articles. Polypropylene flexible packaging articles, and therefore waste comprising these systems, are in general heavily printed, often metallized, small in size, and in contact to biological contaminations. These attributes result in a high contamination level, dark color, odor and emissions, which challenge mechanical recycling. In particular, film application requires high quality grades and challenges intrinsic material properties of recyclate materials.

Many attempts have been made for purifying recycling streams as originating from post-consumer trash/waste. Among those measures washing, sieving, aeration and the like may be mentioned. For example, WO2018046578 discloses a process for the production of polyolefin recyclates from mixed color polyolefin waste including packaging waste comprising cold washing the waste with water followed by washing with an alkali medium at 60 °C, followed by flake color sorting to receive color sorted (white, transparent, other colors) mono polyolefin rich fractions. Those fractions are then treated at 50 - 155 °C. US5767230A describes a process comprising contacting PCR polyolefin chips containing volatile impurities with a heated gas at a superficial velocity sufficient to substantially reduce the volatile impurities such as odor active substances. However, up to now the market is actively looking for the recycled materials with the features as close as possible to the virgin resins. Main applications of flexible polypropylene recyclates could be cast and BOPP film applications, decoration films for furniture, tapes, labels, or additive for injection molding applications to tailor properties, or base material for peroxide modified grades. Color is still a remaining problem not completely addressed. A specific demand exists for recyclates suitable for flexible articles such as films.

Thus, the problem of providing a more valuable polypropylene blend remains.

**Summary of the Invention**

The present invention provides a mixed-plastic polypropylene blend having

(i) a density determined according to DIN EN ISO 1183 of 900 to less than 924 kg/m$^3$;
(ii) a soluble fraction (SF) content determined according to CRYSTEX QC analysis in the range from 3.0 to 12.0 wt.-%, wherein CRYSTEX QC analysis is carried out on basis of ISO 6427 Annex B: 1992 (E) as described in the experimental part further below, whereby
(iii) said soluble fraction (SF) has an ethylene-propylene rubber (EPR) content as expressed by equation (2) of less than 7.0 wt.-%, where the EPR corresponds to the fraction with a molar mass higher than logM of 3.5 to 8 of the soluble fraction (SF) in TCB at 35°C obtained by Cross Fractionation Chromatography (CFC) analysis

$$EPR\ fraction\ in\ wt.-\% = \frac{\sum_{j=3.5}^{8} H_j}{\sum_{j=2}^{8} H_j} * SF \quad equation\ (2),$$

wherein Hj denotes the signal height at logM value j, and wherein Cross Fractionation Chromatography (CFC) analysis is carried out as described in the experimental part further below; and
(iv) said soluble fraction (SF) has an intrinsic viscosity (iV(SF)) in the range from 1.10 to below 1.50 dl/g, preferably 1.25 to 1.45 dl/g, wherein the intrinsic viscosity is determined by CRYSTEX QC analysis on basis of ISO 6427 Annex B: 1992 (E) as described in the experimental part further below; and whereby
(v) the mixed-plastic polypropylene blend has inorganic residues as measured by calcination analysis (TGA) according to DIN ISO 1172:1996 of 0.05 to 3.0 wt.-%, preferably 0.05 to 2.5 wt.-%, optionally 0.5 to 2.0 wt.-% with respect to the mixed-plastic polypropylene blend; and

wherein the mixed-plastic polypropylene blend is a recycled material.

The present invention is also concerned with the mixed-plastic polypropylene blend in pellet form. The present invention further provides extruded articles made from the mixed-plastic polypropylene blend and a use for packaging.

It has been surprisingly found that the mixed-plastic polypropylene blend according to the present invention provides improved flexibly enabling numerous demanding end-use applications.

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below.

Unless clearly indicated otherwise, use of the terms "a," "an," and the like refers to one or more.

As used herein, mixed plastics (also known as post-consumer waste) refers to objects having completed at least a first use cycle (or life cycle), i.e. having already served their first purpose; while "industrial waste" refers to manufacturing scrap, which does not normally reach a consumer. According to the present invention, the waste stream is a consumer waste stream, such a waste stream may originate from conventional collecting systems such as those implemented in the European Union. Post-consumer waste material may e.g. be characterized by a limonene content of from 0.10 to 500 ppm (as determined using solid phase microextraction (HS-SPME-GC-MS) by standard addition). Mixed plastic may e.g. be defined as the presence of low amounts of compounds usually not found in virgin polypropylene blends such as polystyrenes, polyamides, polyesters, wood, paper, limonene, aldehydes, ketones, fatty acids, metals, and/or long term decomposition products of stabilizers. Virgin polypropylene blends denote blends as directly originating from the production process without intermediate use. Thus, virgin materials and recycled materials easily can be differentiated based on absence or presence of contaminants such as limonene and/or fatty acids and/or paper and/or wood.

As a matter of definition, "mixed plastics" can be equated with detectable amounts of polystyrene and/or polyamide-6 and/or limonene and/or fatty acids.

The mixed-plastic polypropylene blend further has a broadened molecular weight distribution because it is a mechanical blend of countless polypropylenes and some very minor amount of low density polyethylene as well as linear low density polyethylenes. It will be understood by those skilled in the art that polypropylenes from various manufactures end up in plastic trash streams particularly when presorted in polyolefin-rich plastic trash streams.

It further will be understood by those skilled in the art that a soluble fraction (SF) as obtained by CRYSTEX QC analysis having an intrinsic viscosity (iV(SF)) in the range from 1.10 to below 1.50 dl/g is typically found in material from recycling streams. In a preferred aspect of the invention the soluble fraction (SF) as obtained by CRYSTEX QC analysis has an intrinsic viscosity (iV(SF)) in the range from 1.25 to below 1.45 dl/g.

It should be understood that mixed plastics may vary broadly in composition, i.e. may include polyolefin homopolymers and polyolefin copolymers.

Conventionally the mixed plastics according to the present invention may have one or more of the following:

- residual chalk content determined as described below;
- residual talc content determined as described below;
- residual content of metals (determined by x ray fluorescence (XRF));
- residual amount of paper determined as described below;
- residual amount of wood determined as described below;
- total free fatty acid content of 0.1 to 100 ppm as measured by using headspace solid phase micro-extraction (HS-SPME-GC-MS).

Talc and chalk content:

TGA according to the following procedure:
Thermogravimetric Analysis (TGA) experiments may be performed with a Perkin Elmer TGA 8000.

Approximately 10-20 mg of material shall be placed in a platinum pan. The temperature is equilibrated at 50°C for 10 minutes, and afterwards raised to 950 °C under nitrogen at a heating rate of 20 °C/min. The weight loss between about 550°C and 700 °C ($WCO_2$) is assigned to $CO_2$ evolving from $CaCO_3$, and therefore the chalk content is evaluated as:

$$\text{Chalk content} = 100/44 \times WCO_2$$

Afterwards the temperature is lowered to 300 °C at a cooling rate of 20 °C/min. Then the gas is switched to oxygen, and the temperature is raised again to 900 °C. The weight loss in this step is assigned to carbon black (Wcb). Knowing the content of carbon black and chalk, the ash content excluding chalk and carbon black is calculated as:

$$\text{Ash content} = (\text{Ash residue}) - 56/44 \times WCO_2 - Wcb$$

Where Ash residue is the weight% measured at 900 °C in the first step conducted under nitrogen. The ash content is estimated to be the same as the talc content for the investigated recyclates.

Amount of Paper, Wood:

Paper and wood are determined by conventional laboratory methods including milling, flotation, microscopy and Thermogravimetric Analysis (TGA).

Limonene detection:

Limonene quantification can be carried out using solid phase microextraction (HS-SPME-GC-MS) by standard addition.

50 mg ground samples are weighed into 20 mL headspace vials and after the addition of limonene in different concentrations and a glass-coated magnetic stir bar, the vial is closed with a magnetic cap lined with silicone/PTFE. Micro capillaries (10 pL) are used to add diluted limonene standards of known concentrations to the sample. Addition of 0, 2, 20 and 100 ng equals 0 mg/kg, 0.1 mg/kg, 1 mg/kg and 5 mg/kg limonene, in addition standard amounts of 6.6 mg/kg, 11 mg/kg and 16.5 mg/kg limonene is used in combination with some of the samples tested in this application. For quantification, ion-93 acquired in SIM mode is used. Enrichment of the volatile fraction is carried out by headspace solid phase microextraction with a 2 cm stable flex 50/30 pm DVB/Carboxen/PDMS fibre at 60°C for 20 minutes. Desorption is carried out directly in the heated injection port of a GCMS system at 270°C.

GCMS Parameters:

Column: 30 m HP 5 MS 0.25*0.25
Injector: Splitless with 0.75 mm SPME Liner, 270°C
Temperature program: -10°C (1 min)
Carrier gas: Helium 5.0, 31 cm/s linear velocity, constant flow
MS: Single quadrupole, direct interface, 280°C interface temperature
Acquisition: SIM scan mode
Scan parameter: 20-300 amu
SIM Parameter: m/Z 93, 100 ms dwell time

Fatty acid detection:

Fatty acid quantification is carried out using headspace solid phase micro-extraction (HS-SPME-GC-MS) by standard addition.

50 mg ground samples are weighed in 20 mL headspace vial and after the addition of limonene in different concentrations and a glass coated magnetic stir bar the vial is closed with a magnetic cap lined with silicone/PTFE. 10 µL Micro-capillaries are used to add diluted free fatty acid mix (acetic acid, propionic acid, butyric acid, pentanoic acid, hexanoic acid and octanoic acid) standards of known concentrations to the sample at three different levels. Addition of 0, 50, 100 and 500 ng equals 0 mg/kg, 1 mg/kg, 2 mg/kg and 10 mg/kg of each individual acid. For quantification ion 60 acquired in SIM mode is used for all acids except propanoic acid, here ion 74 is used.

GCMS Parameter:

Column: 20 m ZB Wax plus 0.25*0.25
Injector: Split 5:1 with glass lined split liner, 250°C
Temperature program: 40°C (1 min) @6°C/min to 120°C, @15°C to 245 °C (5 min)
Carrier: Helium 5.0, 40 cm/s linear velocity, constant flow
MS: Single quadrupole, direct interface, 220°C inter face temperature
Acquisition: SIM scan mode
Scan parameter: 46-250 amu 6.6 scans/s
SIM Parameter: m/z 60, 74, 6.6 scans/s

For the purpose of this invention the mixed-plastic polypropylene blend has preferably at least one of the following:

- a content of limonene of from 0.10 to 500 ppm, preferably from 0.1 to 100 ppm, more preferably from 0.1 to 50 ppm (as determined using solid phase microextraction (HS-SPME-GC-MS) by standard addition);
- a content of polystyrene of up to 6.0 wt.-%;
- a content of talc of up to 3 wt.-%;
- a content of chalk of up to 1.0 wt.-%;
- a content of polyamide(s) of up to 5.0 wt.-%;
- a content of fatty acids (as determined using solid phase microextraction (HS-SPME-GC-MS) by standard addition) of 1.0 to 100 ppm.

A blend denotes a mixture of two or more components, wherein at least one of the components is polymeric. In general, the blend can be prepared by mixing the two or more components. Suitable mixing procedures are known in the art.

If not indicated otherwise "%" refers to weight-%.

When referred to compositions and the weight percent of the therein comprised ingredients it is to be understood that according to the present invention the overall amount of ingredients does not exceed 100% ($\pm$1% due to rounding).

## Detailed description

The mixed-plastic polypropylene blend according to the present invention has

(i) a density determined according to DIN EN ISO 1183 of 900 to less than 924 kg/m$^3$;

(ii) a soluble fraction (SF) content determined according to CRYSTEX QC analysis in the range from 3.0 to 12.0 wt.-%, wherein CRYSTEX QC analysis is carried out on basis of ISO 6427 Annex B: 1992 (E) as described in the experimental part further below, whereby

(iii) said soluble fraction (SF) has an ethylene-propylene rubber (EPR) content as expressed by equation (2) of less than 7.0 wt.-%, where the EPR corresponds to the fraction with a molar mass higher than logM of 3.5 to 8 of the soluble fraction (SF) in TCB at 35°C obtained by Cross Fractionation Chromatography (CFC) analysis

$$EPR\ fraction\ in\ wt.-\% = \frac{\sum_{j=3.5}^{8} H_j}{\sum_{j=2}^{8} H_j} * SF \quad equation\ (2),$$

wherein $H_j$ denotes the signal height at logM value j, and wherein Cross Fractionation Chromatography (CFC) analysis is carried out as described in the experimental part further below; and

(iv) said soluble fraction (SF) has an intrinsic viscosity (iV(SF)) in the range from 1.10 to below 1.50 dl/g, preferably 1.25 to 1.45 dl/g, wherein the intrinsic viscosity is determined by CRYSTEX QC analysis on basis of ISO 6427 Annex B: 1992 (E) as described in the experimental part further below; and whereby

(v) the mixed-plastic polypropylene blend has inorganic residues as measured by calcination analysis (TGA) according to DIN ISO 1172:1996 of 0.05 to 3.0 wt.-%, preferably 0.05 to 2.5 wt.-%, optionally 0.5 to 2.0 wt.-% with respect to the mixed-plastic polypropylene blend; and

wherein the mixed-plastic polypropylene blend is a recycled material.

Preferably, the soluble fraction (SF) content determined according to CRYSTEX QC analysis is in the range from 4.0 to 11.0 wt.-%, more preferably from 5.0 to 10.0 wt.-%, even more preferably from 5.5 to 9.0 wt.-%, and in particular from 6.0 to 8.0 wt.-%.

Preferably, the crystalline fraction (CF) content determined according to CRYSTEX QC analysis is in the range from 88.0 to 97.0. wt.-%, more preferably from 89.0 to 96.0 wt.-%, even more preferably from 90.0 to 95.0 wt.-%, still more preferably from 91.0 to 94.5 wt.-%, and in particular from 92.0 to 94.0 wt.-%.

Preferably, the mixed-plastic polypropylene blend has ethylene units (C2) determined according to CRYSTEX QC analysis, in the range from 2.0 to 9.0 wt.-%, more preferably from 4.0 to 6.0 wt.-%, based on the total weight of the mixed-plastic polypropylene blend. Without being bound to any theory, it is assumed that when the C2 units of a polyolefin material are determined according to CRYSTEX QC the vast majority of the remaining polyolefin units may be attributed to propylene units (C3 units). Thus, the mixed-plastic polypropylene blend preferably has propylene units (C3) determined according to CRYSTEX QC analysis, in the range from 91.0 to 98.0 wt.-%, more preferably from 94.0 to 96.0 wt.-%, based on the total weight of the mixed-plastic polypropylene blend.

Preferably, the mixed-plastic polypropylene blend has an ethylene content of the crystalline fraction (measured by Infrared Spectroscopy (IR) during CRYSTEX analysis), in the range of 1.0 to 15.0 wt.-%, more preferably from 1.0 to 10.0 wt.-%, and even more preferably from 2.0 to 6.0 wt.-%.

Preferably, the mixed-plastic polypropylene blend has an ethylene content of the soluble fraction (measured by Infrared Spectroscopy (IR) during CRYSTEX analysis), in the range of 8.0 to 30.0 wt.-%, more preferably from 10.0 to 25.0 wt.-%, and even more preferably from 15.0 to 20.0 wt.-%.

Preferably, the soluble fraction (SF) has an ethylene-propylene rubber (EPR) content as expressed by equation (2) of 4.7 to less than 7.0 wt.-%, more preferably of 4.7 to 6.5 wt.-%, even more preferably of 5.0 to 6.2 wt.-%, and in particular of 5.1 to 6.0 wt.-%, where the EPR corresponds to the fraction with a molar mass higher than logM of 3.5 to 8 of the soluble fraction (SF) in TCB at 35°C obtained by Cross Fractionation Chromatography (CFC) analysis

$$EPR\ fraction\ in\ wt.-\% = \frac{\sum_{j=3.5}^{8} H_j}{\sum_{j=2}^{8} H_j} * SF \quad equation\ (2),$$

wherein Hj denotes the signal height at logM value j.

Preferably, the soluble fraction (SF) determined according to CRYSTEX QC analysis has an intrinsic viscosity (iV(SF)) in the range from 1.20 to 1.45 dl/g, more preferably from 1.25 to 1.45 dl/g, even more preferably from 1.25 to 1.40 dl/g, and in particular from 1.25 to 1.35 dl/g.

Preferably, the mixed-plastic polypropylene blend has a ratio of the molecular weight of the low crystalline polyethylene fraction (LCF-PE) as observed in CFC analysis in the range of 60 to 85 °C (Mw LCF(60-85)) to the molecular weight of the crystalline ethylene-propylene copolymer as observed in CFC analysis in the range of 103 to 109 °C (Mw EP Copo (103-109)) is of 0.7 to less than 1.4, more preferably of 0.8 to 1.3, even more preferably of 0.9 to 1.2, and in particular of 1.0 to 1.2.

Preferably, the mixed-plastic polypropylene blend has a molecular weight of the low crystalline polyethylene fraction (LCF-PE) as observed in CFC analysis in the range of 60 to 85 °C (Mw LCF(60-85)) is in the range of 60,000 to 110,000 g/mol, more preferably of 80,000 to 105,000 g/mol, and in particular of 85,000 to 100,000 g/mol.

Preferably, the mixed-plastic polypropylene blend has a low crystalline polyethylene fraction (LCF-PE) content as expressed by equation (5) of less than 7.0 wt.-%, more preferably less than 6.0 wt.-%, and in particular less than 5.5 wt.-%, wherein said LCF-PE content is obtained by CFC analysis

$$LCF - PE = \frac{\sum_{i=85}^{89} \sum_{j=0.0185*i+3.1538}^{8} H_{iJ}}{\sum_{i=30}^{140} \sum_{j=2}^{8} H_{iJ}} * 100 \quad (equation\ 5)$$

wherein Hij denotes the signal height and i the elution temperature and j the logM value. Preferably, the mixed-plastic polypropylene blend has a low crystalline polyethylene fraction (LCF-PE) content as expressed by equation (5) of 1.0 to less than 7.0 wt.-%, more preferably 2.0 to 6.0 wt.-%, and in particular 3.0 to 5.5 wt.-%, wherein said LCF-PE content is obtained by CFC analysis

$$LCF - PE = \frac{\sum_{i=85}^{89} \sum_{j=0.0185*i+3.1538}^{8} H_{iJ}}{\sum_{i=30}^{140} \sum_{j=2}^{8} H_{iJ}} * 100 \quad (equation\ 5)$$

wherein Hij denotes the signal height and i the elution temperature and j the logM value.

Preferably, the mixed-plastic polypropylene blend has a Large Amplitude Oscillatory Shear - Non-Linear Factor [LAOS -NLF] (190°C, 1000%) higher than 1.5, more preferably higher than 1.5 to 3.0, even more preferably higher than 1.5 to 2.5, and in particular higher than 1.5 to 2.3, whereby

$$LAOS - NLF = \left| \frac{G_1'}{G_3'} \right|$$

whereby

$G_1'$ is the first order Fourier Coefficient
$G_3'$ is the third order Fourier Coefficient.

Preferably, the mixed-plastic polypropylene blend has a CIELAB color space (L*a*b*) of

- L* from 30.0 to 90.0 preferably from 35.0 to 71.0;
- a* from -5.0 to 0.0;
- b* from 0.0 to below 15.0.

Preferably, the mixed-plastic polypropylene blend has a melt flow rate (ISO1133, 2.16kg; 230°C) of 1.0 to 100.0 g/10min, preferably 2.0 to 20.0 g/10min, more preferably 2.0 to 11.0 g/10min and most preferably more than 2.0 to 10.0 g/10min. In another preferred embodiment, the mixed-plastic polypropylene blend has a melt flow rate (ISO1133, 2.16kg; 230°C) of 2.0 to 50.0 g/10min, preferably of 4.0 to 30.0 g/10min, more preferably of 5.0 to 20.0 g/10min, and in particular of 5.0 to 11.0 g/10min.

Preferably, the mixed-plastic polypropylene blend contains one or more of the following substances:

a) polystyrene
b) polyamide-6
c) limonene as determined by using solid phase microextraction (HS-SPME-GC-MS)
d) fatty acids as determined by using solid phase microextraction (HS-SPME-GC-MS).

Preferably, the mixed-plastic polypropylene blend comprises polyamide(s) determined by FTIR spectroscopy using the absorption of the band at 3300 $cm^{-1}$ (PA6) in the range of up to 2.0 wt.-%, more preferably of 0.1 to 1.0 wt.-%, based on the total weight of the mixed-plastic polypropylene blend. Preferably, the mixed-plastic polypropylene blend comprises polystyrene (PS) determined by FTIR spectroscopy using the absorption of the band at 1601 $cm^{-1}$ (PS) in the range of up to 2.0 wt.-%, more preferably up to 1.0 wt.-%, based on the total weight of the mixed-plastic polypropylene blend.

Preferably, the mixed-plastic polypropylene blend comprises chalk determined by TGA in the range of up to 2.0 wt.-%, more preferably of 0.1 to 1.0 wt.-%, based on the total weight of the mixed-plastic polypropylene blend. Preferably, the mixed-plastic polypropylene blend comprises talc determined by TGA in the range of up to 2.0 wt.-%, more preferably of 0.1 to 1.0 wt.-%, based on the total weight of the mixed-plastic polypropylene blend. Preferably, the mixed-plastic polypropylene blend comprises ash determined by TGA in the range of up to 2.0 wt.-%, more preferably of 0.4 to 1.4 wt.-%, based on the total weight of the mixed-plastic polypropylene blend.

Preferably, the mixed-plastic polypropylene blend comprises heavy metals selected from the group of cadmium, chromium, mercury, lead, and mixtures thereof determined by XRF in the range of up to 2 ppm, preferably up to 1 ppm, and in particular 0 ppm. In this connection, it is to be understood that 0 ppm denotes that the detection limit has been reached. Preferably, the mixed-plastic polypropylene blend comprises titanium determined by XRF in the range of up to 3000 ppm, preferably of 100 to 2900 ppm, and in particular 1000 to 2600 ppm.

Preferably, the density of the mixed-plastic polypropylene blend determined according to DIN EN ISO 1183 is of 900 to 923 kg/m$^3$, more preferably of 905 to 922, even more preferably 910 to 921 mg/m$^3$, and in particular of 915 to 920 kg/m$^3$.

Preferably, the mixed-plastic polypropylene blend has an Eta(0.05rad/s), 200°C of 2000 to 4300 Pa.s, more preferably of 2500 to 4000 Pa.s, and in particular of 3000 to 4000 Pa.s.

Preferably, the mixed-plastic polypropylene blend has an Eta(300rad/s), 200°C of 200 to 280 Pa.s, preferably of 210 to 275 Pa.s, and in particular of 240 to 270 Pa.s

Preferably, the mixed-plastic polypropylene blend has a main peak of heat of fusion determined by DSC of 98 to 105 J/g, more preferably of 99 to 104 J/g.

Preferably, the mixed-plastic polypropylene blend has a tensile strain at break determined according to ISO527-2/A,>96h of 100 to 250%, more preferably of 120 to 230%, and in particular of 130 to 200%. Preferably, the mixed-plastic polypropylene blend has a tensile strain at break determined according to ISO527-2/A,>24h of 140 to 235%, more preferably of 160 to 230%, and in particular of 180 to 225%.

Preferably, the mixed-plastic polypropylene blend has a Shear Thinning Factor (STF), Eta(0.05)/Eta(300) of 9.5 to 16.0, preferably of 10.0 to 14.5.

Preferably, the mixed-plastic polypropylene blend is in form of pellets.

The process for providing the mixed-plastic polypropylene blend according to the present invention is pretty demanding. The process comprises the following steps:

a) providing a precursor mixed plastic recycling stream (A);
b) sieving the precursor mixed plastic recycling stream (A) to create a sieved mixed plastic recycling stream (B) having only articles with a longest dimension in the range from 30 to 400 mm;
c) sorting the sieved mixed plastic recycling stream (B) by means of one or more optical sorters wherein the sieved mixed plastic recycling stream (B) is a least sorted by colour and optionally also by polyolefin type and/or article form, thereby generating a single-colour sorted polyolefin recycling stream (C);

d) shredding the single-colour sorted polyolefin recycling stream (C) to form a flaked polyolefin recycling stream (D);

e) washing the flaked polyolefin recycling stream (D) with a first alkaline aqueous washing solution (W1) having a pH in the range from 8.0 to 14.0, preferably from 10.0 to 14.0, and in particular from 12.0 to 14.0, without the input of thermal energy, thereby generating a first suspended polyolefin recycling stream (E);

f) removing the first alkaline aqueous washing solution (W1) from the first suspended polyolefin recycling stream (E) to obtain a first washed polyolefin recycling stream (F);

g) washing the first washed polyolefin recycling stream (F) with a second alkaline aqueous washing solution (W2) having a pH in the range from 12.0 to 14.0 thereby generating a second suspended polyolefin recycling stream (G), wherein sufficient thermal energy is put into the system to raise the temperature to a temperature in the range from 65 to 95 °C during the washing;

h) removing the second alkaline aqueous washing solution (W2) and any material not floating on the surface of the second alkaline aqueous washing solution from the second suspended polyolefin recycling stream (G) to obtain a second washed polyolefin recycling stream (H);

i) drying the second washed polyolefin recycling stream (H), thereby obtaining a dried polyolefin recycling stream (I);

j) optionally separating the dried polyolefin recycling stream (I) into a light fraction and a heavy fraction polyolefin recycling stream (J);

k) further sorting the heavy fraction polyolefin recycling stream (J) or, in the case that step j) is absent, the dried polyolefin recycling stream (I) by means of one or more optical sorters to remove any flakes containing material other than the target polyolefin, yielding an intermediate (K);

l1) quality control step, wherein the intermediate (K) from step k) is subjected to Cross Fractionation Chromatography (CFC) and whereby determining the ethylene-propylene rubber (EPR) content of the soluble fraction (SF) and double-checking whether said content falls into the range of 0 to 12 wt.-%;

m1) discarding intermediate (K) not having an EPR content of less than 7.0 wt.-%;

n) optionally melt extruding, preferably pelletizing, the intermediate (K), which passed the quality control step l1)/m1), preferably wherein additives (Ad) are added in the melt state, to form an extruded, preferably pelletized, recycled polypropylene blend according to the present invention (N); and

o) optionally aerating the recycled polypropylene blend (N) or, in the case that step n) is absent, the intermediate (K), which passed the quality control step l1)/m1), to remove volatile organic compounds, thereby generating an aerated recycled polypropylene product (O), being either an aerated extruded, preferably pelletized, recycled polypropylene product (O1) or aerated recycled polypropylene flakes (O2),

wherein the order of steps n) and o) can be interchanged, such that the intermediate (K), which passed the quality control step l1)/m1), is first aerated to form aerated recycled polypropylene flakes (O2) that are subsequently extruded, preferably wherein additives (Ad) are added in the melt state, to form an extruded, preferably pelletized, aerated recycled polypropylene product (O3).

It is to be understood that the above process relates according to the present invention to the provision of a recycled polypropylene blend.

Preferably, the above mechanical polyolefin recycling process further comprises steps

l2) quality control step, wherein the intermediate (K), which passed the quality control step l1)/m1), is subjected to Cross Fractionation Chromatography (CFC) and whereby determining the ratio of the molecular weight of the low crystalline polyethylene fraction (LCF-PE) as observed in CFC analysis in the range of 60 to 85 °C (Mw LCF(60-85)) to the molecular weight of the crystalline ethylene-propylene copolymer as observed in CFC analysis in the range of 103 to 109 °C (Mw EP Copo (103-109)) and double-checking whether said ratio falls into the range of 0 to 2.5;

m2) discarding intermediate (K), which passed the quality control step l1)/m1), not having a (Mw LCF(60-85))/(Mw EP Copo (103-109)) ratio in the range of 0.7 to less than 1.4.

Preferably, the above mechanical polyolefin recycling process further comprises steps

l3) quality control step, wherein the intermediate (K), which passed the quality control step l1)/m1) and optionally the quality control step l2)/m2) is subjected to Cross Fractionation Chromatography (CFC) and whereby determining the low crystalline polyethylene (LCF-PE) content and double-checking whether said content falls into the range of 0 to 12 wt.-%;

m3) discarding intermediate (K), which passed the quality control step l1)/m1) and optionally the quality control step l2)/m2), not having an LCF-PE content of less than 7.0 wt.-%, preferably of less than 6.0 wt.-%. In this connection, the LCF-PE content may be obtained by CFC analysis

$$LCF - PE = \frac{\sum_{i=35}^{89} \sum_{j=0.0185*i+3.1538}^{8} H_{ij}}{\sum_{i=30}^{140} \sum_{j=2}^{8} H_{ij}} * 100$$

wherein Hj denotes the signal height and i the elution temperature and j the logM value.

In a particular embodiment, the above mechanical polyolefin recycling process comprises steps l2)/m2) and l3/m3).

Preferable, the shredding of step d) of the above mechanical polyolefin recycling process is a wet shredding process, wherein the sorted polyolefin recycling stream (C) is first contacted with an alkaline aqueous solution (W0) having a pH in the range from 12.0 to 14.0 and the obtained suspension is subjected to shredding.

Preferably, the first aqueous washing solution (W1) comprises a detergent in an amount in the range from 0.1 wt.-% to 1.0 wt.-%, relative to the total weight of the first aqueous washing solution (W1).

The detergent(s) may be commercially available detergent mixtures or may be composed in any way known to the person skilled in the art. Suitable detergents include TUBIWASH SKP, TUBIWASH GFN, TUBIWASH EYE and TUBIWASH TOP, commercially available from CHT, KRONES colclean AD 1004, KRONES colclean AD 1002 and KRONES colclean AD 1008 from KIC KRONES, and P3-stabilon WT, P3 stabilon AL from ECOLAB Ltd.

Preferably, the second alkaline aqueous washing solution (W2) of the above mechanical polyolefin recycling process is an alkaline aqueous solution of a base selected from the group consisting of calcium hydroxide, potassium hydroxide, magnesium hydroxide, sodium bicarbonate, sodium hydroxide and mixtures thereof, preferably sodium hydroxide. In this connection, the amount of the base in the alkaline aqueous solution is preferably in the range from 0.05 to 10 wt.-%, more preferably in the range from 0.10 to 7.0 wt.-%, most preferably in the range from 0.50 to 5.0 wt.-%, relative to the total weight of the alkaline aqueous solution.

Preferably, the second aqueous washing solution (W2) comprises a detergent in an amount in the range from 0.1 wt.-% to 1.0 wt.-%, relative to the total weight of the second aqueous washing solution (W2).

The detergent(s) may be a commercially available detergent mixture or may be composed in any way known to the person skilled in the art. Suitable detergents include TUBIWASH SKP, TUBIWASH GFN, TUBIWASH EYE and TUBIWASH TOP, commercially available from CHT, KRONES colclean AD 1004, KRONES colclean AD 1002 and KRONES colclean AD 1008 from KIC KRONES, and P3-stabilon WT, P3 stabilon AL from ECOLAB Ltd.

Preferably, the alkaline aqueous washing solution removed in step h) of the above mechanical polyolefin recycling process is recycled for use as the first alkaline aqueous washing solution (W1) and the alkaline aqueous solution (W0), if present.

Preferably, the precursor mixed plastic recycling stream (A) of the above mechanical polyolefin recycling process originates from post-consumer waste, post-industrial waste, or a combination thereof, preferably from post-consumer waste.

Preferably, the precursor mixed plastic recycling stream (A) of the above mechanical polyolefin recycling process originates from post-consumer waste comprising more than 80 wt.-%, preferably more than 90 wt.-%, based on the total weight of the post-consumer waste of flexible polypropylene post-consumer waste. Flexible polypropylene post-consumer waste may origin from films, bags, pouches, and the like.

The person skilled in the art would be aware of multiple ways in which the sieving of step b) could be achieved and, as such, this sieving step is not particularly limited. That said, it is preferred that the sieving of step b) is achieved by using one sieve with a sieve diameter of 30 mm and another sieve with a sieve diameter of 400 mm to divide the precursor mixed recycling stream into three streams, an undersized stream of articles having a longest dimension of less than 30 mm, an oversized stream of articles having a longest dimension of greater than 400 mm and the sieved mixed plastic recycling stream (B). The undersized and oversized streams may either be discarded or redirected for use in other mechanical polyolefin recycling processes.

In the broadest sense, any optical sorter can be used to achieve the sorting of step c) (and step k)). In the context of the present invention, the term "optical sorter" refers to a sorting unit that uses any form of EM-radiation (visible or non-visible) to differentiate the pieces of the sieved mixed plastic recycling stream (B).

Suitable methods for sorting the recycling stream according to colour include camera systems (operating in the visible range of the EM-spectrum) and visible reflectance spectroscopy.

Suitable methods for sorting the recycling stream according to polyolefin type include near-IR spectroscopic analysis, mid-IR spectroscopic analysis, high-speed laser spectroscopic analysis, Raman spectroscopic analysis, Fourier-transform infrared (FT IR) spectroscopic analysis. Particularly preferred is near-IR spectroscopic analysis.

Suitable methods for sorting the recycling stream according to article type include camera systems (operating in the visible range of the EM-spectrum).

It is preferred that the sorting of step c) sorts according to colour and polyolefin type, meaning that the single-colour sorted polyolefin recycling stream (C) is of a single colour and all articles contain a single polyolefin.

In some embodiments, a single sensor type (e.g. near-IR sensor or camera system operating in the visible range of the EM spectrum) can be used to distinguish more than one property (e.g. colour and polyolefin type or colour and article form). Furthermore, many near-IR sensor units comprises visible reflectance units or may be configured to measure both the near-IR and visible areas of the EM spectrum, meaning that a single sensor unit may use multiple detection methods.

The term "article form", as used herein, refers to the shape and form of articles present in a polyolefin recycling stream. Such articles may be present, inter alia, in the form of films, bags, and pouches, which may be considered as flexible articles, and, inter alia, in the form of moulded articles such as food containers and trays, skin-care product containers, and plastic bottles, which may be considered as rigid articles. Commercial optical sorters, such as Tomra Autosort, RTT Steinert Unisort, Redwave, and Pellenc, are able to separate so-called rigid articles from so-called flexible articles via their aerodynamic properties (i.e. a stream of gas is typically applied to the stream and those articles being rigid articles will fall with a different arc than flexible articles), converting streams containing such articles into so-called rigid streams and flex streams.

Multiple detection methods and/or multiple sensors can be employed to achieve the sorting of step c).

It is further preferred that the sorting of step c) sorts according to colour, polyolefin type and article form, meaning that the single-colour sorted polyolefin recycling stream (C) is of a single colour, all articles contain a single polyolefin and that the stream contains only rigid or flexible articles.

Although the above processes are suitable for the isolation of any desired polyolefin from a polyolefin mixed recycling stream, the isolation of polyethylene or polypropylene is particularly desirable, since these will most likely be the major polyolefin components of any polyolefin mixed recycling stream, and isolated polyethylene or isolated polypropylene can be fed into pure recycled polyolefin streams or extruded and pelletized along to afford pellets of the desired polyolefin, i.e. of polyethylene or polypropylene.

Preferably, the single-colour sorted polyolefin recycling stream (C) of the above mechanical polyolefin recycling process is a single-colour sorted polypropylene recycling stream.

The sorting of step c) can be achieved through simple sorting algorithms, wherein the optical sensor(s) are programmed to assess which pieces should be selected or rejected based on simple binary considerations. Alternatively, more complex AI-based systems can be used to achieve a more precise sorting, in particular when sorting according to article form.

Step k) uses at least a first optical sorter to remove any flake that contains material other than the target polyolefin. The selection criteria in this optical sorter are that if any material other than the target polyolefin is present in a given flake, that this flake will be separated from the stream, affording a purified polyolefin recycling stream.

Multiple optical sorters having the same sorting criteria may be arranged in series to improve the purity of the intermediate (K). Alternatively or additionally, multiple optical sorters may be arranged in series to sort for different criteria, for example colour and/or article form; however, it is preferred that each of the one or more optical sorters of step k) are sorting by polyolefin type as described above.

Step h) involves removing the second alkaline aqueous washing solution (W2) and any material not floating on the surface of the first aqueous washing solution from the second suspended polyolefin recycling stream (G) to obtain a second washed polyolefin recycling stream (H).

In contrast to step f), wherein only minor amounts of foreign material suspended or dissolved in the alkaline aqueous washing solution are removed, step h) involves a so-called float/sink separation, whereby any and all material not floating on the surface of the alkaline aqueous washing solution is removed. This would be understood by the person skilled in the art to have the effect of removing any foreign material having a density of greater than 1.00 g/cm$^3$.

Step k) may be performed in a flake sorter, preferably in a belt-flake sorter.

The above-outlined mixed-plastic polypropylene blend can be used to produce any suitable article.

In a further aspect, the present invention relates to an extruded article made from the above-outlined mixed-plastic polypropylene blend.

The skilled person will be aware of how to obtain extruded articles under standard conditions.

Preferably, the extruded article is a film.

Preferably, the film is extruded at a melt temperature of 200 to 260 °C, preferably of 210 to 250 °C, and in particular of 220 to 245 °C.

Preferably, the film is extruded at a screw speed in the range of 40 to 500 rpm, preferably of 50 to 400 rpm, and in particular of 60 to 300 rpm.

Preferably, the film is extruded by using a chill roll, preferably wherein the chill roll temperature is in the range of 15 to 80°C. The skilled person in the art is aware of the specific chill roll temperature that is to be chosen for a certain material.

Preferably, the film has a thickness of 10 to 150 μm, more preferably of 20 to 120 μm, even more preferably of 30 to 100 μm, and in particular of 35 to 80 μm.

Preferably, the film has an impact failure weight determined by the free falling dart test according to ASTM D1709 of 40 to 90 g, more preferably of 45 to 80 g, and in particular of 50 to 70 g.

Preferably, the film has a normalised total penetration energy of film puncture determined according to ISO7765-2, 4.4m/s at 23 °C of more than 2.2 J/mm, more preferably of more than 2.2 to 5.0 J/mm, and in particular of 2.3 to 4.0 J/mm.

Preferably, the film has a MD relative tear resistance determined according to ISO6383-2 of less than 12.5 N/mm, more preferably of 4.0 to 11.0 N/mm, and in particular of 5.0 to 10.5 J/mm. Preferably, the film has a TD relative tear resistance determined according to ISO6383-2 of less than 75.0 J/mm, more preferably of 40.0 to less than 75.0 J/mm, and in particular of 50 to 72.0 J/mm.

Preferably, the film has a MD tensile modulus determined according to ISO527-3, 23°C of more than 430 MPa, more preferably of 435 to 800 MPa, and in particular of 470 to 630 MPa. Preferably, the film has a TD tensile modulus determined according to ISO527-3, 23°C of more than 415 MPa, more preferably of 420 to 750 MPa, and in particular of 450 to 600 MPa.

Preferably, the film has an MD (machine direction) gloss, film outside, determined according to ASTM D2457, 45°, of more than 20°, more preferably of 21 to 40°, and in particular of 22 to 30°. Preferably, the film has an TD (transverse direction) gloss, film outside, determined according to ASTM D2457, 45°, of more than 17°, more preferably of 19 to 35°, and in particular of 20 to 28°.

Preferably, the film has a clarity determined according to ASTM D1003 of more than 33%, more preferably of 35 to 80%, and in particular of 45 to 75%. Preferably, the film has a haze determined according to ASTM D1003 of less than 75%, more preferably of 35 to 72%, and in particular of 50 to 65%. Preferably, the film has a diffuse luminous transmittance determined according to ASTM D1003 of less than 46.5%, more preferably of 20 to less than 46.5%.

In a further aspect, the present invention relates to the use of the above-outlined mixed-plastic polypropylene blend for packaging.

All preferred aspects, definitions and embodiments as described above shall also hold for the extruded article and the use of the above-outlined mixed-plastic polypropylene blend for packaging.

The gist of the present invention will be further outlined in the following examples.

## Experimental Part

The following Examples are included to demonstrate certain aspects and embodiments of the invention as described in the claims. It should be appreciated by those of skill in the art, however, that the following description is illustrative only and should not be taken in any way as a restriction of the invention.

### 1. Test Methods

#### a) Melt Flow rate

Melt flow rates were measured with a load of 2.16 kg ($MFR_2$) at 230 °C as indicated. The melt flow rate is that quantity of polymer in grams which the test apparatus standardized to ISO 1133 extrudes within 10 minutes at a temperature of 230 °C under a load of 2.16 kg.

$MFR_2$ (230 °C) is measured according to ISO 1133 (230 °C, 2.16 kg load).

#### b) Tensile Modulus [MPa]

The Tensile Modulus was measured according to ISO 527-2 (cross head speed = 50 mm/min; 23 °C, unless identified differently) using injection molded specimens as described in EN ISO 1873-2 (dog bone shape, 4 mm thickness). To determine stress at yield, a speed of 50 mm/min was used.

#### c) Charpy notched impact strength (NIS)

The Charpy notched impact strength was determined according to ISO 179-1/1eA on notched 80 mm × 10 mm × 4 mm specimens (specimens were prepared according to ISO 179-1/1eA). Testing temperatures were 23±2 °C and -20 °C. Injection molding was carried out according to ISO 19069-2.

#### d) Flexural Modulus [MPa]

The flexural modulus was determined according to ISO 178 method A (3-point bending test) on 80 mm × 10 mm × 4 mm specimens. Following the standard, a test speed of 2 mm/min and a span length of 16 times the thickness was used. The testing temperature was 23±2° C. Injection moulding was carried out according to ISO 19069-2.

### e) DSC analysis, melting temperature (Tm) and heat of fusion (∆Hf), crystallization temperature (Tc), heat of crystallisation (∆Hc) and heat of fusion (∆Hm)

The DSC was measured with a TA Instrument Q2000 differential scanning calorimetry (DSC) on 5 to 7 mg samples. DSC was run according to ISO 11357 / part 3 /method C2 in a heat / cool / heat cycle with a scan rate of 10 °C/min in the temperature range of -30 to +225 °C. The crystallization temperature (Tc) was determined from the cooling step, while melting temperature (Tm) and melting enthalpy (∆Hm) can be determined from the second heating step. The crystallinity can be calculated from the melting enthalpy by assuming an ∆Hm-value of 209 J/g for a fully crystalline polypropylene (see Brandrup, J., Immergut, E. H., Eds. Polymer Handbook, 3rd ed. Wiley, New York, 1989; Chapter 3).

### f) Crystalline and soluble fractions and their respective properties (Crystex analysis)

The crystalline (CF) and soluble fractions (SF) of the polyolefin (PO) compositions, the final ethylene units content of the PO composition, the ethylene units content of the respective fractions, as well as the intrinsic viscosities of the respective fractions were analysed by the CRYSTEX QC Polymer Char (Valencia, Spain) on basis ISO 6427 Annex B: 1992 (E).

A schematic representation of the CRYSTEX QC instrument is presented in Del Hierro, P.; Ortin, A.; Monrabal, B.; 'Soluble Fraction Analysis in polypropylene, The Column, February 2014. Pages 18-23. The crystalline and amorphous fractions are separated through temperature cycles of dissolution in 1,2,4-trichlorobenzene (1,2,4-TCB) at 160 °C, crystallization at 40 °C and re-dissolution in 1,2,4-TCB at 160 °C. Quantification of SF and CF and determination of ethylene content (C2) are achieved by means of an infrared detector (IR4) and an online 2-capillary viscometer is used for the determination of the intrinsic viscosity (IV).

IR4 detector is a multiple wavelength detector detecting IR absorbance at two different bands ($CH_3$ stretching vibration (centred at approx. 2960 $cm^{-1}$) and $CH_x$ stretching vibration (2700-3000 $cm^{-1}$)) which can be used to determine of the concentration and the ethylene content in ethylene-propylene copolymers (EP copolymers). The IR4 detector is calibrated with series of 8 EP copolymers with known ethylene content in the range of 2 wt.-% to 69 wt.-% (determined by 13C-NMR) and each at various concentrations, in the range of 2 and 13 mg/ml. To account for both features, concentration and ethylene content at the same time for various polymer concentration expected during Crystex analyses the following calibration equations were applied:

**Equation 1:**

$$Conc = a + b*Abs(CH) + c*(Abs(CH_x))^2 + d*Abs(CH_3) + e*(Abs(CH_3))^2 + f*Abs(CH_x)*Abs(CH_3)$$

**Equation 2:**

$$CH_3/1000C = a + b*Abs(CH_x) + c*Abs(CH_3) + d*(Abs(CH_3)/Abs(CH_x)) + e*(Abs(CH_3)/Abs(CH_x))^2$$

The constants a to e for equation 1 and a to f for equation 2 were determined by using least square regression analysis.

**Equation 3:** The CH3/1000C is converted to the ethylene content in wt.-% using following relationship:

$$wt.-\% \text{ (Ethylene in EP Copolymers)} = 100 - CH_3/1000TC * 0.3$$

Amount of Soluble fraction (SF) and Crystalline Fraction (CF) are correlated through the XS calibration to the "Xylene Cold Soluble" (XCS) fraction and "Xylene Cold Insoluble" (XCI) fraction, respectively, determined according to standard gravimetric method as per ISO16152. XS calibration is achieved by testing various EP copolymers with xylene cold soluble (XCS) content in the range 2-31 Wt.-%. The determined XS calibration is linear **(Equation 4)**:

$$wt.-\% \text{ XCS} = 1.01* wt.-\% \text{ SF}$$

Intrinsic viscosity (IV) of the parent EP copolymer and its soluble fraction (SF) and crystalline fraction (CF) are determined with a use of an online 2-capillary viscometer and are correlated to corresponding IV's determined by standard method in decalin according to ISO 1628-3.

Calibration is achieved with several commercial EP PP copolymers with IV = 2-4 dL/g. The determined calibration curve between the Vsp, measured in CRYSTEX QC and normalized by the concentration (c), and the IV is linear **(Equation 5)**:

$$IV \, (dl/g) = a* \, Vsp/c$$

with a slope of a = 16.2.

A sample of the PO composition to be analysed is weighed out in concentrations of 10 mg/ml to 20 mg/ml. After automated filling of the vial with 1,2,4-TCB containing 250 mg/l 2,6-tert-butyl-4-methylphenol (BHT) as antioxidant, the sample is dissolved at 160 °C until complete dissolution is achieved, usually for 60 min, with constant stirring of 400 rpm to 800 rpm. To avoid sample degradation, polymer solution is blanketed with the N2 atmosphere during dissolution.

A defined volume of the sample solution is injected into the column filled with inert support where the crystallization of the sample and separation of the soluble fraction from the crystalline part is taking place. This process is repeated two times. During the first injection the whole sample is measured at high temperature, determining the IV[dl/g] and the C2[wt.-%] of the PO composition. During the second injection the soluble fraction (SF, at low temperature, 40 °C) and the crystalline fraction (CF, at high temperature, 160 °C) with the crystallization cycle are determined (Wt.-% SF, Wt.-% C2, IV).

### $^{13}$C NMR spectroscopy-based determination of C2 content for the calibration standards

Quantitative $^{13}$C{$^1$H} NMR spectra were recorded in the solution-state using a Bruker Avance III 400 NMR spectrometer operating at 400.15 and 100.62 MHz for $^1$H and $^{13}$C respectively. All spectra were recorded using a $^{13}$C optimised 10 mm extended temperature probehead at 125 °C using nitrogen gas for all pneumatics. Approximately 200 mg of material was dissolved in 3 ml of *1,2*-tetrachloroethane-$d_2$ (TCE-$d_2$) along with chromium (III) acetylacetonate (Cr(acac)$_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225, Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra. Quantitative $^{13}$C {$^1$H} NMR spectra were processed, integrated and relevant quantitative properties determined from the integrals. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed (Cheng, H. N., Macromolecules 17 (1984), 1950) and the comonomer fraction calculated as the fraction of ethylene in the polymer with respect to all monomer in the polymer:

$$fE = (E \, / \, (P + E))$$

The comonomer fraction was quantified using the method of Wang et. al. (Wang, W-J., Zhu, S., Macromolecules 33 (2000), 1157) through integration of multiple signals across the whole spectral region in the $^{13}$C{$^1$H} spectra. This method was chosen for its robust nature and ability to account for the presence of regio-defects when needed. Integral regions were slightly adjusted to increase applicability across the whole range of encountered comonomer contents. For systems with very low ethylene content where only isolated ethylene in PPEPP sequences were observed the method of Wang et. al. was modified reducing the influence of integration of sites that are no longer present. This approach reduced the overestimation of ethylene content for such systems and was achieved by reduction of the number of sites used to determine the absolute ethylene content to

$$E = 0.5(S\beta\beta + S\beta\gamma + S\beta\delta + 0.5( \, S\alpha\beta + S\alpha\gamma))$$

Through the use of this set of sites the corresponding integral equation becomes

$$E = 0.5(I_H + I_G + 0.5(I_C + I_D \,))$$

using the same notation used in the article of Wang et. al. (Wang, W-J., Zhu, S., Macromolecules 33 (2000), 1157). Equations used for absolute propylene content were not modified. The mole percent comonomer incorporation was calculated from the mole fraction:

$$E \, [mol\%] = 100 * fE.$$

The weight percent comonomer incorporation was calculated from the mole fraction:

$$E\ [wt\%] = 100 * (fE * 28.06) / ((fE * 28.06) + ((1-fE) * 42.08))$$

**g) Density**

The density is measured according to ISO 1183-187. Sample preparation is done by compression moulding in accordance with ISO 1872-2:2007.

**h) Cross Fractionation Chromatography**

The chemical composition distribution as well as the determination of the molecular weight distribution and the corresponded molecular weight averages (Mn, Mw and Mv) at a certain elution temperature (polymer crystallinity in solution) were determined by a full automated Cross Fractionation Chromatography (CFC) as described by Ortin A., Monrabal B., Sancho-Tello J., Macromol. Symp., 2007, 257, 13-28.
A CFC instrument (PolymerChar, Valencia, Spain) was used to perform the cross-fractionation chromatography (TREF x SEC). A four band IR5 infrared detector (PolymerChar, Valencia, Spain) was used to monitor the concentration. The polymer was dissolved at 160°C for 150 minutes at a concentration of around 1mg/ml.
To avoid injecting possible gels and polymers, which do not dissolve in TCB at 160°C, like PET and PA, the weighed out sample was packed into stainless steel mesh MW 0,077/D 0,05mmm.
Once the sample was completely dissolved an aliquot of 0,5 ml was loaded into the TREF column and stabilized for a while at 110 °C. The polymer was crystallized and precipitate to a temperature of 30°C by applying a constant cooling rate of 0.1 °C/min. A discontinuous elution process is performed using the following temperature steps: (35, 40, 50, 55, 60, 65, 70, 75, 80, 85, 90, 95, 100, 103, 106, 109, 112, 115, 117, 119, 121, 123, 125, 127, 130, 135 and 140).
In the second dimension, the GPC analysis, 3 PL Olexis columns and 1x Olexis Guard columns from Agilent (Church Stretton, UK) were used as stationary phase. As eluent 1,2,4-trichlorobenzene (TCB, stabilized with 250 mg/L 2,6-Di tert butyl-4-methyl-phenol) at 150 °C and a constant flow rate of 1 mL/min were applied. The column set was calibrated using universal calibration (according to ISO 16014-2:2003) with at least 15 narrow MWD polystyrene (PS) standards in the range of 0,5 kg/mol to 11 500 kg/mol. Following Mark Houwink constants were used to convert PS molecular weights into the PP molecular weight equivalents.

$$K_{PS} = 19 \times 10^{-3}\ mL/g, \quad \alpha_{PS} = 0.655$$

$$K_{PP} = 19 \times 10^{-3}\ mL/g, \quad \alpha_{PP} = 0.725$$

A third order polynomial fit was used to fit the calibration data. Data processing was performed using the software provided from PolymerChar with the CFC instrument.
**Calculation of the relative fraction at certain molecular weight and elution temperature areas of iso-PP in wt.-%.**
To calculate the relative fraction at certain molecular weight and elution temperature areas of iso-PP in wt.-% in the first step the amount of iso-PP in wt.-% from the CFC contour plot needs to be calculated:

$$\text{Iso PP in wt.-\%} = 100 - \text{EPR fraction} - \text{PE fraction} \quad \text{equation (1)}$$

Where the EPR is the fraction with a molar mass higher than logM of 3.5 of the soluble fraction (SF) in TCB at 35°C obtained by CFC analysis

$$EPR\ fraction\ in\ wt.-\% = \frac{\sum_{j=3.5}^{8} H_j}{\sum_{j=2}^{8} H_j} * SF \quad equation\ (2)$$

wherein Hj denotes the signal height at logM value j.
Due to the slightly dependence of the TREF profile on the low MW part, the molecular weight limit of the low MW limit is elution temperature ($T_{el}$) dependent. The low MW limit was determined using the following formula:

$$\text{Low MW limit (for PE Fraction)} = 0.0185 * T_{el} + 3.1538$$

Taking this into account the PE fraction is calculated using the following approach.

$$PE_{Fraction} = \frac{\sum_{i=35}^{99} \sum_{j=0.0185*i+3.1538}^{8} H_{ij}}{\sum_{i=30}^{140} \sum_{j=2}^{8} H_{ij}} *100 \quad \text{(equation 3)}$$

Where Hij is the 2D differential distribution at the corresponded elution temperature ($T_{el}$) i and the logM value j, obtained with the corresponded data processing software.

The High crystalline PE fraction (HCF-PE) is defined as the part of the PE fraction eluting from 90°C to 100°C of PE fraction.

$$HCF - PE = \frac{\sum_{i=90}^{99} \sum_{j=0.0185*i+3.1538}^{8} H_{ij}}{\sum_{i=30}^{140} \sum_{j=2}^{8} H_{ij}} *100 \quad \text{(equation 4)}$$

wherein Hij denotes the signal height at logM value j, and i the elution temperature.

This fraction contains mainly homo PE and PE copolymers with very low amount of comonomer, below app. 3 SCB/1000TC (L. Wild, T.R. Ryle, D.C. Knoblauch, I.R. Peat, J. Polym. Sci, Polym. Phys. 20, (1982), 441-455).

Where the low crystalline PE Fraction (LCF-PE) is defined as the part of the PE fraction eluting between 35°C and 89°C of the PE fraction.

$$LCF - PE = \frac{\sum_{i=35}^{89} \sum_{j=0.0185*i+3.1538}^{8} H_{ij}}{\sum_{i=30}^{140} \sum_{j=2}^{8} H_{ij}} *100 \quad \text{(equation 5)}$$

wherein Hij denotes the signal height at logM value j, and i the elution temperature.

This fraction contains mainly the copolymer fraction from HDPE and LLDPE obtained by ZN catalysts or the LLDPE from SS catalysts but also LDPE, as this kind of polymer are co-eluting due to their comparable amount of SCB/1000TC.

**Calculation of Mw LCF(60-85)) and Mw EP Copo (103-109°C)**

The calculation of Mw LCF(60-85°C) and Mw EP copo (103-109°C) is done using the following formula:

$$M_w(LCF\ (60 - 85°C) = \frac{\sum_{i=60°C}^{85°C} w_i M_{wi}}{\sum_{i=60°C}^{85°C} w_i}$$

$$M_w(EP\ copo\ (103 - 109°C) = \frac{\sum_{i=103°C}^{109°C} w_i M_{wi}}{\sum_{i=103°C}^{109°C} w_i}$$

Where $w_i$ is the weight fraction of TREF fraction at temperature i and $Mw_i$ is the corresponded weight average molecular weight of the fraction determined by CFC analysis.

In the case the LCF (60-85°C) region includes the CFC fraction at 60, 65, 70, 75, 80, 85 °C and the EP copo fraction (103-109°C) the corresponded CFC fraction at 103, 106 and 109°C.

Fractions with less than 0.5 wt.-% are neglected in the calculation.

Basic references:

Zhang, Macromol Symp. 282 (2009), 111-127.
W. Yau, D. Gillespie, Polymer 42 (2001) 8947-8958.
Monrabal, in "Encyclopedia of Analytical Chemistry", R. A. Meyers, Ed., John Wiley & Sons Ltd., 2000.
Nakano, Y. Goto, J. Appl. Polym. Sci. (1981), 26, 4217.

W. Yau, Macromol. Symp. 2007, 257, 29-45.
Faldi, J.B.P. Soares, Polymer 42 (2001) 3057-3066.
Ortin, B. Monrabal, J, Sancho-Tello, Macromol. Symp. 257 (2007), 13-28.
Li Pi Shan, D. Gillespie, L. Hazlitt, Ecorep 2005. Lyon.

### i) LARGE AMPLITUDE OSCILLATORY SHEAR (LAOS)

The investigation of the non-linear viscoelastic behavior under shear flow was done resorting to Large Amplitude Oscillatory Shear. The method requires the application of a sinusoidal strain amplitude, $\gamma 0$, imposed at a given angular frequency, $\omega$, for a given time, t. Provided that the applied sinusoidal strain is high enough, a non-linear response is generated. The stress, $\sigma$ is in this case a function of the applied strain amplitude, time and the angular frequency. Under these conditions, the non-linear stress response is still a periodic function; however, it can no longer be expressed by a single harmonic sinusoid. The stress resulting from a non-linear viscoelastic response [0-0] can be expressed by a Fourier series, which includes the higher harmonics contributions:

$$\sigma(t, \omega, \gamma_0) = \gamma_0 . \sum_n [G'_n(\omega, \gamma_0). \sin(n\omega t) + G''_n(\omega, \gamma_0). \cos(n\omega t)] \qquad (1)$$

with, $\sigma$ - stress response
t - time
$\omega$ - frequency
$\gamma_0$ - strain amplitude
$n$- harmonic number
$G'_n$- n order elastic Fourier coefficient
$G''_n$- n order viscous Fourier coefficient

The non-linear viscoelastic response was analysed applying Large Amplitude Oscillatory Shear (LAOS). Time sweep measurements were undertaken on an RPA 2000 rheometer from Alpha Technologies coupled with a standard biconical die. During the course of the measurement the test chamber is sealed and a pressure of about 6 MPa is applied. The LAOS test is done applying a temperature of 190 °C, an angular frequency of 0.628 rad/s and a strain of 1000 %. In order to ensure that steady state conditions are reached, the non-linear response is only determined after at least 20 cycles per measurement are completed. The Large Amplitude Oscillatory Shear Non-Linear Factor (LAOS_NLF) is defined by:

$$LAOS_{NLF}(190°C, 1000\%) = \left| \frac{G'_1}{G'_3} \right| \qquad (2)$$

where $G'_1$ - first order Fourier Coefficient

$G'_3$ - third order Fourier Coefficient

[1] J. M. Dealy, K. F. Wissbrun, Melt Rheology and Its Role in Plastics Processing: Theory and Applications; edited by Van Nostrand Reinhold, New York (1990)
[2] S. Filipe, Non-Linear Rheology of Polymer Melts, AIP Conference Proceedings 1152, pp. 168-174 (2009)
[3] M. Wilhelm, Macromol. Mat. Eng. 287, 83-105 (2002)
[4] S. Filipe, K. Hofstadler, K. Klimke, A. T. Tran, Non-Linear Rheological Parameters for Characterisation of Molecular Structural Properties in Polyolefins, Proceedings of Annual European Rheology Conference, 135 (2010)
[5] S. Filipe, K. Klimke, A. T. Tran, J. Reussner, Proceedings of Novel Non-Linear Rheological Parameters for Molecular Structural Characterisation of Polyolefins, Novel Trends in Rheology IV, Zlin, Check Republik (2011)
[6] K. Klimke, S. Filipe, A. T. Tran, Non-linear rheological parameters for characterization of molecular structural properties in polyolefins, Proceedings of European Polymer Conference, Granada, Spain (2011)

### j) Presence of polyamide-6 and polystyrene

By FTIR spectroscopy using the absorption of the band at 1601 $cm^{-1}$ (PS) and 3300 $cm^{-1}$ (PA6).

### k) Odor VDA270-B3

VDA 270 is a determination of the odor characteristics of trim materials in motor vehicles. In this study, the odor is determined following VDA 270 (2018) variant B3. The odor of the respective sample is evaluated by each assessor according to the VDA 270 scale after lifting the jar's lid as little as possible. The hexamerous scale consists of the following grades: Grade 1: not perceptible, Grade 2: perceptible, not disturbing, Grade 3: clearly perceptible, but not disturbing, Grade 4: disturbing, Grade 5: strongly disturbing, Grade 6: not acceptable. Assessors stay calm during the assessment and are not allowed to bias each other by discussing individual results during the test. They are not allowed to adjust their assessment after testing another sample, either. For statistical reasons (and as accepted by the VDA 270) assessors are forced to use whole steps in their evaluation. Consequently, the odor grade is based on the average mean of all individual assessments, and rounded to whole numbers.

### l) CIELAB color space (L*a*b*)

In the CIE L*a*b* uniform color space, measured according to DIN EN ISO 11664-4, the color coordinates are: L*- the lightness coordinate; a*-the red/green coordinate, with +a* indicating red, and -a* indicating green; and b*-the yellow/blue coordinate, with +b* indicating yellow, and -b* indicating blue. The L*, a*, and b* coordinate axis define the three dimensional CIE color space. Standard Konica/Minolta Colorimeter CM-3700A.

### m) Amount of Metals

determined by x ray fluorescence (XRF).

### n) Inorganic residues

TGA according to DIN ISO 1172:1996 using a Perkin Elmer TGA 8000. Approximately 10-20 mg of material was placed in a platinum pan. The temperature was equilibrated at 50°C for 10 minutes, and afterwards raised to 950°C under nitrogen at a heating rate of 20 °C/min. The ash content was evaluated as the weight % at 850°C.

### o) Dynamic Shear Measurements (Eta(2.7kPa) and Eta(300rad/s))

The characterisation of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression-moulded plates, using nitrogen atmosphere and setting a strain within the linear viscoelastic regime. The oscillatory shear tests were done at 200°C applying a frequency range between 628 and 0,01 rad/s, with data evaluation of 5 datapoints per decade and a logarithmic ramped strain of 2-7% that is used. The plate-plate geometry has a diameter of 25mm and a gap size of 1,3mm is used. The trimming is carried out at 1,4mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \qquad (1)$$

If the applied strain is within the linear viscoelastic regime, the resulting sinusoidal stress response can be given by

$$\sigma(t) = \sigma_0 \sin(\omega t + \delta) \qquad (2)$$

where

$\sigma_0$ and $\gamma_0$ are the stress and strain amplitudes, respectively
$\omega$ frequency is the angular
$\delta$ is the phase shift (loss angle between applied strain and stress response)
t is the time

Dynamic test results are typically expressed by means of several different rheological functions, namely the shear storage modulus G', the shear loss modulus, G", the complex shear modulus, G*, the complex shear viscosity, $\eta^*$, the dynamic shear viscosity, $\eta'$, the out-of-phase component of the complex shear viscosity $\eta''$ and the loss tangent, tan $\delta$ which can be expressed as follows:

$$G' = \frac{\sigma_0}{\gamma_0} \cos\delta \; [Pa] \qquad (3)$$

$$G'' = \frac{\sigma_o}{\gamma_o} \sin\delta \; [Pa] \qquad (4)$$

$$G^* = G' + iG'' \; [Pa] \qquad (5)$$

$$\eta^* = \eta' - i\eta'' \; [Pa.s] \qquad (6)$$

$$\eta' = \frac{G''}{\omega} \; [Pa.s] \qquad (7)$$

$$\eta'' = \frac{G'}{\omega} \; [Pa.s] \qquad (8)$$

ETA(x kPa) is determined according with equation 9.

$$ETA(x\,kPa) = Eta^* \;\; for \;\; (G^* = x\,kPa) \; [Pa.s] \qquad (9)$$

For example, the ETA(2.7 kPa) is the defined by the value of the complex viscosity, determined for a value of complex modulus equal to 2.7 kPa.

Eta (x rad/s) is determined according with equation 10.

$$ETA(x\,rad/s) = Eta^* \;\; for \;\; (\omega = x\,rad/s) \; [Pa.s] \qquad (10)$$

For example, the ETA(300 rad/s) is defined by the value of the complex viscosity, determined at a frequency sweep of 300 rad/s.

Equally, the ETA(0.05 rad/s) is defined by the value of the complex viscosity, determined at a frequency sweep of 0.05 rad/s.

**p) Shear Thinning Factor (STF) is defined as**

$$STF = \frac{Eta^*\,for\,(\omega=0.05\,rad/s)}{Eta^*\,for\,(\omega=300\,rad/s)} \qquad (11)$$

The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus "- Interpolate y-values to x-values from parameter" and the "logarithmic interpolation type" were applied.

References:

[1] Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362

[2] The influence of molecular structure on some rheological properties of polyethylene", Heino, E.L., Borealis Polymers Oy, Porvoo, Finland, Annual Transactions of the Nordic Rheology Society, 1995.).

[3] Definition of terms relating to the non-ultimate mechanical properties of polymers, Pure & Appl. Chem., Vol. 70, No. 3, pp. 701-754, 1998.

## q) Dynamic shear measurements for determination of cross-over modulus Gc, cross-over frequency W(c), Polydispersity Index (PI), and the zero shear viscosity eta0

The PI is determined by a so-called frequency sweep at 200°C in nitrogen atmosphere using a plate-plate geometry of 25mm diameter and a gap size of 1,3mm. The trimming is carried out at 1,4mm. An angular frequency range of 628 to 0,01 rad/s with data evaluation of 5 datapoints per decade and a logarithmic ramped strain of 2-7% is used. By the dynamic shear measurement the loss modulus G"(w) and the storage modulus G'(w) are determined as a function of angular frequency. Cross-over modulus $G_c$ at the cross-over frequency $w_c$ (also described as W(c)) is the intersection of the functions G'(w) and G"(w). The polydispersity index is defined as

$$PI = 100\ 000/G_c \hspace{4cm} (12)$$

and indicated in Pa^-1.

Eta0, the zero shear viscosity, is calculated via the RheoPlus Rheometer software (by Anton Paar GmbH) using the model of Carreau and Yasuda (method *"Carreau Yasuda I model"*).

References:

[1] Bafna, S.S. "Is the Cross-Over Modulus a Reliable Measure of Polymeric Polydispersity?" Journal of Applied Polymer Science, Vol. 63, pp. 111-113, 1997.

[2] Steeman, P. A. M. "A numerical study of various rheological polydispersity measures", Rheologica Acta, Vol. 37 (6), pp. 583-592, 1998

[3] Zeichner G. R., and Patel P. D. A Comprehensive Evaluation of Polypropylene Melt Rheology", Conference Proceeding, Chemical engineering for world development, pp. 333-337, 1981

## r) Screening of organic emissions by thermo-desorption analysis, TD GC-FID

This method describes the semi-quantitative determination of organic compounds emitting from polyolefins. It is similar to the VDA 278 (October 2011) but includes specific adjustments.

Directly after the production the sample (injection moulded plaque, DIN-A5) is sealed in an aluminium-coated polyethylene bag and provided to the lab within 14 days. In the lab, it is stored openly for 7 days below 25 °C. After this period, an aliquot of 60 ± 5 mg is prepared from the stored sample. Trimming the aliquot should aim for a maximum coherent area. It is not the aim to create the largest possible surface area by cutting the aliquot into smaller pieces. The diameter of the sample injection tube should be used first. Length and thickness should be chosen accordingly, considering the specified aliquot weight. The aliquot is directly desorbed using heat and a flow of helium gas. Volatile and semi-volatile organic compounds are extracted into the gas stream and cryo-focused prior to the injection into a gas chromatographic (GC) system for analysis. The method comprises two extraction stages: In the analysis of low-boiling substances (LBS) the aliquot is desorbed at 90 °C for 30 min to determine volatile organic compounds in the boiling / elution range up to n-C25 (n-pentacosane). The analysis of high-boiling substances (HBS) involves a further desorption step of the same aliquot at 120 °C for 60 min to determine semi-volatile compounds in the boiling / elution range from n-C14 (n-tetradecane) to n-C32 (n-dotriacontane).

Similar to the VOC and FOG value in the VDA 278, the LBS is calculated as toluene equivalent (TE) and the HBS is calculated as hexadecane equivalent (HE) applying a semi-quantitation and a respective calibration. The result is expressed in "μg/g".

Integration parameters for the LBS and HBS evaluation are chosen in such way that the "area reject" corresponds to the area of 1 μg/g (TE and HE, respectively). Thus, smaller peaks do not add to the semi-quantitative result. The GC oven program is kept the same, no matter if a calibration run, an LBS run or an HBS run was performed. It starts at 50 °C (1 min hold), followed by a ramp of 10 °C/min and an end temperature of 320 °C (10 min hold). For the GC column an Agilent DB5: 50 m x 250 μm x 0.25 μm (or comparable) is used. The method requires a Thermal Desorption System TDS 3 (Gerstel) and a Cooled Injection System CIS 4 (Gerstel) as well as a GC system with a flame ionisation detector (FID) but does not involve a mass spectrometer. Instead of 280 °C the CIS end temperature is always set to 380 °C.

**EP 4 269 498 B1**

**s) Free falling dart**

Determined according to ASTM D1709.

**t) Film puncture**

Determined according to **4.4** m/s, 23°C, ISO7765-2.

**u) Film tear testing**

Determined according to ISO 6383-2.

**v) Film tensile testing**

Determined according to ISO 527-3 at 23°C.

**w) Gloss film outside**

Determined according to ASTM D2457 at 45 degree (film inside) on a cast film of 50 μm thickness produced on a monolayer cast film line with a melt temperature of 235°C and a chill roll temperature of 20-60°C.

**x) Transmittance, Haze, Clarity**

Determined according to ASTM D1003 on cast films of 50 μm thickness produced on a monolayer cast film line with a melt temperature of 235°C and a chill roll temperature of 20-60°C.

**2. Examples**

**Materials**

IE1 and IE2 were pre-sorted by the above-outlined mechanical polyolefin recycling process comprising the quality control step l1)/m1). For IE1 a Swedish post-consumer plastic trash enriched in post-consumer flexible PP articles, was used as precursor mixed plastic recycling stream (A). For IE2, German post-consumer plastic trash fulfilling the specification DSD323-2 was used as precursor mixed plastic recycling stream (A).

For CE1, the post-consumer plastic trash fulfilling the German specification DSD323-2 was used as precursor mixed plastic recycling stream (A). However, the recycling process did not comprise the quality control step.

CE2, CE3, CE4 (visbroken using peroxides), CE5, and CE6 are commercially available post-consumer recyclates, which were not further pre-sorted by the above-outlined mechanical polyolefin recycling process comprising the quality control step l1)/m1).

As can be seen from Table 1, commercially available recyclates, which were not pre-sorted by the above-outlined mechanical polyolefin recycling process comprising the quality control step l1)/m1), are not within the claimed EPR range (less than 7.0 wt.-%). Without being bound to any theory, it is assumed that thus these feedstocks are not suitable starting material for the manufacturing of films, since they do not address challenges of conversion into films, such as polymer and melt homogeneity, and do not meet mechanical performance requirements of films.

Table 1: HCF-PE denotes the high crystalline PE fraction; LCF-PE denotes the low crystalline PE fraction; "Ratio Mw LCF/Mw EP copo" denotes the ratio of the molecular weight of the low crystalline polyethylene fraction (LCF-PE) as observed in CFC analysis in the range of 60 to 85 °C (Mw LCF(60-85)) to the molecular weight of the crystalline ethylene-propylene copolymer as observed in CFC analysis in the range of 103 to 109 °C (Mw EP Copo (103-109)); EPR denotes the ethylene-propylene rubber content obtained by CFC analysis of the soluble fraction (SF)

| Sample | Mw (EP copo 103-109°C) [g/mol] | MFR (230°C/ 2.16kg) [g/10 min] | Density [g/cm$^3$] | Mw (LCF-PE) [g/mol] | HCF-PE [wt.-%] | LCF-PE [wt.-%] | Ratio Mw LCF/Mw EP copo | EPR [wt.-%] |
|---|---|---|---|---|---|---|---|---|
| CE4 | 59700 | 37.3 | 0.910 | 140000 | 0.5 | 3.6 | 2.3 | 8.4 |
| CE5 | 79600 | 15.89 | 0.916 | 113000 | 1.8 | 4 | 1.4 | 7.4 |

(continued)

| Sample | Mw (EP copo 103-109°C) [g/mol] | MFR (230°C/ 2.16kg) [g/10 min] | Density [g/cm³] | Mw (LCF-PE) [g/mol] | HCF-PE [wt.-%] | LCF-PE [wt.-%] | Ratio Mw LCF/Mw EP copo | EPR [wt.-%] |
|---|---|---|---|---|---|---|---|---|
| CE6 | 79800 | 15.62 | 0.919 | 110400 | 2 | 4.8 | 1.4 | 7.9 |
| IE2 | 81800 | 916.3 | 10 | 90100 | 0.4 | 4.8 | 1.1 | 5.5 |
| IE1 | 86600 | 919.2 | 8.2 | 97300 | 0.7 | 3.6 | 1.1 | 5.2 |
| CE1; DSD323-2 | 82600 | 6.9 | 925.1 | 119000 | 0.8 | 7.0 | 1.4 | 4.6 |
| CE2 | 70800 | 24.3 | 921.8 | 140300 | 4.4 | 7.9 | 2.0 | 10.2 |
| CE3 | 135700 | 5.7 | 941.4 | 83600 | 5.4 | 15.8 | 1.8 | 0.6 |

The used PP material has further properties as outlined in Table 2. Cast film (50 μm) were manufactured with a melt temperature of 235°C and a screw speed between 95 and 100rpm from the polypropylene material. Depending on the used polypropylene material chill roll temperatures in the range of 20 to 60 °C were used. A person skilled in the art is aware of the specific chill roll temperature that is to be chosen for a certain material. The film properties are also outlined in Table 2.

Table 2: n.a. denotes not available; "no peak int. of subst." denotes "no peak integration of substance"; n denotes the number of batches tested

| | IE1 | IE2 | CE1 | CE2 | CE3 |
|---|---|---|---|---|---|
| Base Material | | DSD323-2 | DSD323-2 | | |
| Feedstock | pre-sorted with quality control step | pre-sorted with quality control step | pre-sorted without quality control step | No further treatment | No further treatment |
| Odor VDA270-B3, rating average | n.a. | 4.3 | 3.7 | 4.15 (n=4) | 5.7 (n=1) |
| TD GC-FID - VOC (<C25), μg/g (no peak int. of subst. <1 μg/g) | 6 | 6 | | 119.75 (n=4) | |
| TD GC-FID - FOG (C14-C32), μg/g (no peak int. of subst. <1 μg/g) | 177 | 270 | | 582.5 (n=4) | |
| Density (g/cm³) | 919.2 | 916.3 | 925.1 | 921.77 (n=12) | 941.43 (n=3) |
| MFR(230°C/2.16kg), g/10 min | 8.15 | 10 | 6.92 | 24.29 (n=20) | 5.67 (n=18) |
| C2 (Crystex), wt% | 4.7 | 5.24 | | 11.2 (n=3) | 46.4 (n=3) |
| C2 (Crystex), crystalline fraction CF, wt% | 3.31 | 4.45 | | 9.2 (n=3) | 46.9 (n=3) |
| C2 (Crystex), soluble fraction SF, wt% | 15.79 | 16.13 | | 14.1 (n=3) | 46.3 (n=3) |
| intrinsic viscosity, (Crystex), (IV(CF), dL/g | 1.92 | 1.84 | | 1.58 (n=3) | 1.84 (n=3) |
| intrinsic viscosity (Crystex), crystalline fraction, dL/g | 1.92 | 1.88 | | 1.47 (n=3) | 1.90 (n=3) |
| intrinsic viscosity (Crystex), soluble fraction, dL/g | 1.33 | 1.27 | | 1.93 (n=3) | 1.03 (n=3) |
| soluble fraction (SF) (Crystex), content, wt% | 7.23 | 7.77 | | 14.1 (n=3) | 8.6 (n=3) |

(continued)

| | IE1 | IE2 | CE1 | CE2 | CE3 |
|---|---|---|---|---|---|
| Base Material | | DSD323-2 | DSD323-2 | | |
| crystalline fraction (CF) (Crystex), content wt% | 92.77 | 92.23 | | | |
| Polyamide - PA (IR), wt% | 0.2 | 0.2 | 0.3 | | |
| Polystyrene - PS (IR), wt% | 0.7 | - | 0.2 | | |
| Talc (TGA), wt% | 0.2 | 0.2 | 0.3 | | |
| Chalk (TGA), wt% | 0.2 | 0.2 | 0.3 | | |
| Carbon Black (TGA), wt% | 0 | 0 | 0.1 | 0.02 (n=8) | 0.18 (n=9) |
| Heavy metals (XRF, sum of Cd, Cr, Hg, Pb), ppm | 0 | 0 | 8 | | |
| Cd (XRF), ppm | | | | 21.2 (n=5) | |
| Cr (XRF), ppm | | | | 47 (n=1) | |
| Hg (XRF), ppm | | | | | |
| Pb (XRF), ppm | | | | 68 (n=7) | |
| Ti (XRF), ppm | 2448 | 1944 | 4609 | 2471.57 (n=7) | |
| Ash content (TGA), wt% | 1.2 | 0.63 | 1.2 | 1.47 (n=9) | 1.85 (n=9) |
| Melting point (main peak) (DSC), °C | 162 | 161 | 162 | | |
| Heat of fusion, (main peak) (DSC), J/g | 102.4 | 101.7 | 96.12 | | |
| Melting point ($2^{nd}$ peak) (DSC), °C | 124 | 123 | 123 | | |
| Heat of fusion, ($2^{nd}$ peak) (DSC), J/g | 1.518 | 1.244 | 2.074 | | |
| CIELab<br>L* (the higher the value, the brighter the product is)<br>a* b* | 43.36<br>-1.62<br>1.49 | 60.08<br>-3.09<br>7.21 | 47.82<br>-2.46<br>5.82 | | |
| Tensile Modulus (ISO 527-2/1A, >96h), MPa | $1346 \pm 3$ | $1295 \pm 4$ | $1312 \pm 4$ | 1293.5 (n=14) | 926.8 (n=15) |
| Tensile Strength (ISO 527-2/1A, >96h), MPa | $30.2 \pm 0.1$ | $29.6 \pm 0.04$ | $29.4 \pm 0.1$ | 25.08 (n=14) | 21.76 (n=15) |
| Tensile strain at break (ISO 527-2/1A, >96h), % | $159.88 \pm 45.52$ | $180.94 \pm 59.51$ | $85.63 \pm 32.41$ | 16.71 (n=14) | 78.89 (n=15) |
| Tensile Modulus (ISO 527-2/1A, >24h), MPa | $1247 \pm 6$ | $1203 \pm 4$ | $1197 \pm 3$ | | |
| Tensile Strength (ISO 527-2/1A, >24h), MPa | $29.19 \pm 0.1$ | $28.51 \pm 0.1$ | $28.04 \pm 0.1$ | | |
| Tensile strain at break (ISO 527-2/1A, >24h), % | $215.94 \pm 30.28$ | $222.91 \pm 40.02$ | $237.82 \pm 47.45$ | | |
| Flexural Modulus (ISO 178/type B), MPa | $1166 \pm 10$ | $1133 \pm 7$ | $1114 \pm 9$ | 1213.33 (n=9) | 872.2 (n=5) |

(continued)

| | IE1 | IE2 | CE1 | CE2 | CE3 |
|---|---|---|---|---|---|
| Base Material | | DSD323-2 | DSD323-2 | | |
| Charpy NIS +23°C (ISO 179-1/1eA), >96h, kJ/m$^2$ | 4.32 ± 0.56 | 4.9 ± 0.24 | 4.91 ± 0.44 | 5.52 (n=14) | 5.94 (n=14) |
| Charpy NIS -20°C (ISO 179-1/1eA), >96h, kJ/m$^2$ | 1.92 ± 0.03 | 1.71 ± 0.37 | 1.72 ± 0.53 | 2.77 (n=10.0) | 2.24 (n=11) |
| Polydispersity Index (PI), 200°C, Pa.s-1 | 3.71 | 3.54 | 3.54 | 2.9 (n=2) | |
| Eta 0, 200°C, Pa.s. | 4252 | 3483 | 5278 | | |
| W (c), 200°C, rad/s0 | 57.55 | 75.92 | 55.44 | 208.84 (n=2) | |
| Eta(0.05rad/s), 200°C, Pa.s. | 3812 | 3160 | 4326 | 1350.0 (n=2) | |
| Eta(300rad/s), 200°C, Pa.s. | 268 | 255 | 284 | 198.5 (n=2) | |
| Shear Thinning Factor (STF), Eta(0.05)/Eta(300) | 14.2 | 12.4 | 15.2 | | |
| NLF @ 1000% (LAOS) | 1.6 ± 0.35 | 2.26 ± 0.51 | 2.18 ± 0.16 | | |
| Film Testing, cast film 50μm | | | | | |
| Free falling dart, ASTM D1709, Impact failure weight, g | 60 | 54 | 37 | | |
| Film puncture, instr., 4,4 m/s, 23°C, ISO7765-2 | | | | | |
| normalised energy to peak force, J/mm | 1.8 ± 0.5 | 2.3 ± 1 | 1.3 ± 0.4 | | |
| normalised peak force, N/mm | 771.5 ± 84.9 | 816 ± 83.9 | 628.3 ± 71.5 | | |
| normalised total penetration energy, J/mm | 2.5 ± 1 | 5.7 ± 3.7 | 1.6 ± 0.6 | | |
| Film Tear Testing, Elmendorf, ISO 6383-2 | | | | | |
| MD relative tear resistance, N/mm | 9.28 ± 0.91 | 10.14 ± 0.93 | 12.85 ± 3.93 | | |
| TD relative tear resistance, N/mm | 61.68 ± 13 | 71.75 ± 20.96 | 75.65 ± 34.99 | | |
| Film Tensile Testing, 23°C ISO 527-3 | | | | | |
| MD tensile modulus, MPa | 518.50 ± 25.50 | 544.60 ± 21.90 | 413 ± 28.2 | | |
| MD tensile strength, MPa | 34.42 ± 2.52 | 37.22 ± 2.09 | 18.83 ± 3.55 | | |
| MD nominal tensile strain at break,% | 551.24 ± 35.98 | 570.04 ± 18.04 | 493.49 ± 107.89 | | |
| TD tensile modulus, MPa | 497.7 ± 28.5 | 507.7 ± 17.9 | 411.5 ± 25 | | |
| TD tensile strength, MPa | 22.11 ± 2.63 | 23.47 ± 1.63 | 27.69 ± 2.22 | | |
| TD nominal tensile strain at break,% | 568.51 ± 47.65 | 577.07 ± 23.48 | 521.53 ± 17.68 | | |

(continued)

|  | IE1 | IE2 | CE1 | CE2 | CE3 |
|---|---|---|---|---|---|
| Base Material |  | DSD323-2 | DSD323-2 |  |  |
| Gloss, Film outside, 45° ASTM D2457 |  |  |  |  |  |
| gloss 45° MD, GU | 25 ± 0.4 | 25.8 ± 0.3 | 19.1 ± 0.3 |  |  |
| gloss 45° TD, GU | 23 ± 0.3 | 22.6 ± 0.2 | 16.7 ± 0.2 |  |  |
| Transmittance, Haze, Clarity, ASTM D1003 |  |  |  |  |  |
| Clarity, % | 52.5 ± 0.3 | 49.4 ± 0.2 | 32.6 ± 0.6 |  |  |
| Haze, % | 58.37 ± 0.54 | 58.53 ± 0.39 | 78.33 ± 1.35 |  |  |
| diffuse luminous transmittance, % | 38.63 ± 0.1 | 46.1 ± 0.18 | 46.64 ± 0.73 |  |  |

It can be seen that the prior art is enriched by the inventive recycling composition. The inventive feedstock provides improved properties of the manufactured films when it comes to e.g. elasticity (cf. Free falling dart and Film puncture). Further, IE1 and IE2 provide improved optical properties (cf. Clarity and Haze).

## Claims

1.  A mixed-plastic polypropylene blend having

(i) a density determined according to DIN EN ISO 1183 of 900 to less than 924 kg/m$^3$;
(ii) a soluble fraction (SF) content determined according to CRYSTEX QC analysis in the range from 3.0 to 12.0 wt.-%, wherein CRYSTEX QC analysis is carried out on basis of ISO 6427 Annex B: 1992 (E) as described in the experimental part of the specification, whereby
(iii) said soluble fraction (SF) has an ethylene-propylene rubber (EPR) content as expressed by equation (2) of less than 7.0 wt.-%, where the EPR corresponds to the fraction with a molar mass higher than logM of 3.5 to 8 of the soluble fraction (SF) in TCB at 35°C obtained by Cross Fractionation Chromatography (CFC) analysis

$$EPR\ fraction\ in\ wt.-\% = \frac{\sum_{j=3.5}^{8} H_j}{\sum_{j=2}^{8} H_j} * SF \quad equation\ (2)$$

wherein Hj denotes the signal height at logM value j, and wherein Cross Fractionation Chromatography (CFC) analysis is carried out as described in the experimental part of the specification; and
(iv) said soluble fraction (SF) has an intrinsic viscosity (iV(SF)) in the range from 1.10 to below 1.50 dl/g, preferably 1.25 to 1.45 dl/g, wherein the intrinsic viscosity is determined by CRYSTEX QC analysis on basis of ISO 6427 Annex B: 1992 (E) as described in the experimental part of the specification; and
whereby
(v) the mixed-plastic polypropylene blend has inorganic residues as measured by calcination analysis (TGA) according to DIN ISO 1172:1996 of 0.05 to 3.0 wt.-%, preferably 0.05 to 2.5 wt.-%, optionally 0.5 to 2.0 wt.-% with respect to the mixed-plastic polypropylene blend; and

wherein the mixed-plastic polypropylene blend is a recycled material.

2.  The mixed-plastic polypropylene blend according to claim 1, wherein the ratio of the molecular weight of the low crystalline polyethylene fraction (LCF-PE) as observed in Cross Fractionation Chromatography (CFC) analysis in the range of 60 to 85 °C (Mw LCF(60-85)) to the molecular weight of the crystalline ethylene-propylene copolymer as observed in Cross Fractionation Chromatography (CFC) analysis in the range of 103 to 109 °C (Mw EP Copo (103-109)) is of 0.7 to less than 1.4, and wherein Cross Fractionation Chromatography (CFC) analysis is carried out as described in the experimental part of the specification.

3. The mixed-plastic polypropylene blend according to claim 1 or 2, wherein

the low crystalline polyethylene fraction (LCF-PE) content as expressed by equation (5) is less than 7.0 wt.-%, preferably less than 6.0 wt.-%, wherein said LCF-PE content is obtained by Cross Fractionation Chromatography (CFC) analysis

$$LCF - PE = \frac{\sum_{i=35}^{89} \sum_{j=0.0185*i+3.1538}^{8} H_{ij}}{\sum_{i=30}^{140} \sum_{j=2}^{8} H_{ij}} *100 \text{ (equation 5)}$$

wherein Hij denotes the signal height and i the elution temperature and j the logM value, and wherein Cross Fractionation Chromatography (CFC) analysis is carried out as described in the experimental part of the specification.

4. The mixed-plastic polypropylene blend according to any one of the preceding claims, having a Large Amplitude Oscillatory Shear - Non-Linear Factor [LAOS -NLF] (190°C, angular frequency of 0.628 rad/s, strain of 1000%) higher than 1.5, preferably higher than 1.5 to 3.0, more preferably higher than 1.5 to 2.3, whereby

$$\text{LAOS} - \text{NLF} = \left| \frac{G_1'}{G_3'} \right|$$

whereby

$G_1'$ is the first order Fourier Coefficient
$G_3'$ is the third order Fourier Coefficient, and
Large Amplitude Oscillatory Shear (LAOS) analysis is carried out as described in the experimental part of the specification.

5. The mixed-plastic polypropylene blend according to any one of the preceding claims, wherein the mixed-plastic polypropylene blend has a CIELAB color space (L*a*b*), measured according to DIN EN ISO 11664-4, of

- L* from 30.0 to 90.0 preferably from 35.0 to 71.0;
- a* from -5.0 to 0.0;
- b* from 0.0 to below 15.0.

6. The mixed-plastic polypropylene blend according to any one of the preceding claims having a melt flow rate (ISO1133, 2.16kg; 230°C) of 1.0 to 100.0 g/10min, preferably 2.0 to 20.0 g/10min, more preferably 2.0 to 11.0 g/10min and most preferably more than 2.0 to 10.0 g/10min.

7. The mixed-plastic polypropylene blend according to any one of the preceding claims containing one or more of the following substances:

a) polystyrene
b) polyamide-6
c) limonene as determined by using solid phase microextraction (HS-SPME-GC-MS)
d) fatty acids as determined by using solid phase microextraction (HS-SPME-GC-MS).

8. The mixed-plastic polypropylene blend according to any one of the preceding claims having a density determined according to DIN EN ISO 1183 of 900 to 923 kg/m³, preferably of 905 to 922 kg/m³, more preferably of 910 to 921 kg/m³, and in particular of 915 to 920 mg/m³.

9. The mixed-plastic polypropylene blend according to any one of the preceding claims having

an Eta(0.05rad/s), 200°C of 2000 to 4300 Pa.s, preferably of 2500 to 4000 Pa.s, and in particular of 3000 to 4000 Pa.s, wherein Eta(0.05rad/s) is the complex viscosity value determined according to ISO standards 6721-1 and 6721-10 at a frequency sweep of 0.05 rad/s, and/or
an Eta(300rad/s), 200°C of 200 to 280 Pa.s, preferably of 210 to 275 Pa.s, and in particular of 240 to 270 Pa.s, wherein Eta(300rad/s) is the complex viscosity value determined according to ISO standards 6721-1 and 6721-10 at a frequency sweep of 300 rad/s.

10. The mixed-plastic polypropylene blend according to any one of the preceding claims having a Shear Thinning Factor (STF), Eta(0.05)/Eta(300) of 9.5 to 16.0, preferably of 10.0 to 14.5, wherein Eta(0.05rad/s) and Eta(300rad/s) are the complex viscosity values determined according to ISO standards 6721-1 and 6721-10 at a frequency sweep of 0.05 rad/s and 300 rad/s, respectively.

11. The mixed-plastic polypropylene blend according to any one of the preceding claims being in form of pellets.

12. Extruded article made from the mixed-plastic polypropylene blend according to any one of the preceding claims.

13. The extruded article according to claim 12 being a film.

14. Use of the mixed-plastic polypropylene blend according to any one of claims 1 to 11 for packaging.


**Patentansprüche**

1. Gemischtes Polypropylen-Plastik-Gemisch mit

(i) einer nach DIN EN ISO 1183 bestimmten Dichte von 900 bis weniger als 924 kg/m$^3$;
(ii) einem nach der CRYSTEX QC-Analyse bestimmten Gehalt an löslicher Fraktion (SF) im Bereich von 3,0 bis 12,0 Gew.-%, wobei die CRYSTEX QC-Analyse auf der Grundlage von ISO 6427 Anhang B: 1992 (E) wie im experimentellen Teil der Beschreibung beschrieben durchgeführt wird, wobei
(iii) die lösliche Fraktion (SF) einen Ethylen-Propylen-Kautschuk (EPR)-Gehalt, ausgedrückt durch Gleichung (2), von weniger als 7,0 Gew.-% aufweist, wobei der EPR der Fraktion mit einer Molmasse von mehr als logM von 3,5 bis 8 der löslichen Fraktion (SF) in TCB bei 35°C entspricht, die durch Kreuzfraktionierungschromatographie (CFC)-Analyse erhalten wird

$$EPR - Fraktion\ in\ Gew. -\% = \frac{\sum_{j=3.5}^{8} H_j}{\sum_{j=2}^{8} H_j} * SF \quad Gleichung\ (2),$$

wobei Hj die Signalhöhe beim logM-Wert j bezeichnet, und wobei die Kreuzfraktionierungschromatographie (CFC)-Analyse wie im experimentellen Teil der Beschreibung beschrieben durchgeführt wird; und
(iv) die lösliche Fraktion (SF) eine intrinsische Viskosität (iV(SF)) im Bereich von 1,10 bis unter 1,50 dl/g, vorzugsweise 1,25 bis 1,45 dl/g, aufweist, wobei die intrinsische Viskosität durch CRYSTEX QC-Analyse auf der Grundlage von ISO 6427 Anhang B: 1992 (E), wie im experimentellen Teil der Beschreibung beschrieben, bestimmt wird; und
wobei
(v) das gemischte Polypropylen-Plastik-Gemisch anorganische Rückstände, gemessen durch Kalzinierungsanalyse (TGA) gemäß DIN ISO 1172:1996, von 0,05 bis 3,0 Gew.-%, vorzugsweise 0,05 bis 2,5 Gew.-%, optional 0,5 bis 2,0 Gew.-%, bezogen auf das gemischte Polypropylen-Plastik-Gemisch, aufweist; und

wobei das gemischte Polypropylen-Plastik-Gemisch ein recyceltes Material ist.

2. Gemischtes Polypropylen-Plastik-Gemisch gemäß Anspruch 1, wobei das Verhältnis des Molekulargewichts der niedrigkristallinen Polyethylenfraktion (LCF-PE), wie es in der Kreuzfraktionierungschromatographie (CFC)-Analyse im Bereich von 60 bis 85 °C beobachtet wird (Mw LCF(60-85)), zum Molekulargewicht des kristallinen Ethylen-Propylen-Copolymers, wie es in der Kreuzfraktionierungschromatographie (CFC)-Analyse im Bereich von 103 bis 109 °C beobachtet wird (Mw EP Copo (103-109)), 0,7 bis weniger als 1,4 beträgt, und wobei die Kreuzfraktionierungschromatographie (CFC)-Analyse wie im experimentellen Teil der Beschreibung beschrieben durchgeführt wird.

3. Gemischtes Polypropylen-Plastik-Gemisch gemäß Anspruch 1 oder 2, wobei der Gehalt an niedrig kristalliner Polyethylenfraktion (LCF-PE), ausgedrückt durch Gleichung (5), weniger als 7,0 Gew.-%, vorzugsweise weniger als 6,0 Gew.-% beträgt, wobei der LCF-PE-Gehalt durch Kreuzfraktionierungschromatographie (CFC)-Analyse ermittelt wird

$$LCF - PE = \frac{\sum_{i=35}^{89} \sum_{j=0.0185*i+3.1538}^{8} H_{iJ}}{\sum_{i=30}^{140} \sum_{j=2}^{8} H_{iJ}} *100 \qquad \text{(Gleichung 5)}$$

wobei Hij die Signalhöhe, i die Elutionstemperatur und j den logM-Wert bezeichnet, und wobei die Kreuzfraktionierungschromatographie (CFC)-Analyse wie im experimentellen Teil der Beschreibung beschrieben durchgeführt wird.

4. Gemischtes Polypropylen-Plastik-Gemisch gemäß einem der vorhergehenden Ansprüche mit einem Large Amplitude Oscillatory Shear - Non-Linear Factor [LAOS -NLF] (190°C, Winkelfrequenz von 0,628 rad/s, Dehnung von 1000%) höher als 1,5, vorzugsweise höher als 1,5 bis 3,0, besonders bevorzugt höher als 1,5 bis 2,3, wobei

$$\text{LAOS - NLF} = \left| \frac{G'_1}{G'_3} \right|$$

wobei

$G_1'$ der Fourier-Koeffizient erster Ordnung ist
$G_3'$ der Fourier-Koeffizient dritter Ordnung ist, und
die LAOS (Large Amplitude Oscillatory Shear)-Analyse wie im experimentellen Teil der Beschreibung beschrieben durchgeführt wird.

5. Gemischtes Polypropylen-Plastik-Gemisch gemäß einem der vorhergehenden Ansprüche, wobei das gemischte Polypropylen-Plastik-Gemisch einen CIELAB-Farbraum (L*a*b*) aufweist, gemessen nach DIN EN ISO 11664-4, von

- L* von 30,0 bis 90,0, vorzugsweise von 35,0 bis 71,0;
- a* von -5,0 bis 0,0;
- b* von 0,0 bis unter 15,0.

6. Gemischtes Polypropylen-Plastik-Gemisch gemäß einem der vorhergehenden Ansprüche mit einer Schmelzflussrate (ISO1133, 2,16 kg; 230°C) von 1,0 bis 100,0 g/10min, vorzugsweise 2,0 bis 20,0 g/10min, noch bevorzugter 2,0 bis 11,0 g/10min und am meisten bevorzugt mehr als 2,0 bis 10,0 g/10min.

7. Gemischtes Polypropylen-Plastik-Gemisch gemäß einem der vorhergehenden Ansprüche, die eine oder mehrere der folgenden Substanzen enthält:

a) Polystyrol
b) Polyamid-6
c) Limonen, bestimmt durch Festphasenmikroextraktion (HS-SPME-GC-MS)
d) Fettsäuren, bestimmt durch Festphasenmikroextraktion (HS-SPME-GC-MS).

8. Gemischtes Polypropylen-Plastik-Gemisch gemäß einem der vorhergehenden Ansprüche mit einer nach DIN EN ISO 1183 bestimmten Dichte von 900 bis 923 kg/m$^3$, vorzugsweise von 905 bis 922 kg/m$^3$, besonders bevorzugt von 910 bis 921 kg/m$^3$ und insbesondere von 915 bis 920 mg/m$^3$.

9. Gemischtes Polypropylen-Plastik-Gemisch gemäß einem der vorangehenden Ansprüche mit

einem Eta(0,05rad/s), 200°C von 2000 bis 4300 Pa.s, vorzugsweise von 2500 bis 4000 Pa.s und insbesondere von 3000 bis 4000 Pa.s, wobei Eta(0,05rad/s) der komplexe Viskositätswert ist, der gemäß den ISO-Normen 6721-1 und 6721-10 bei einem Frequenzdurchlauf von 0,05 rad/s bestimmt wird, und/oder
einem Eta(300rad/s), 200°C von 200 bis 280 Pa.s, vorzugsweise von 210 bis 275 Pa.s und insbesondere von 240 bis 270 Pa.s, wobei Eta(300rad/s) der komplexe Viskositätswert ist, der gemäß den ISO-Normen 6721-1 und 6721-10 bei einem Frequenzdurchlauf von 300 rad/s bestimmt wird.

**10.** Gemischtes Polypropylen-Plastik-Gemisch gemäß einem der vorhergehenden Ansprüche mit einem Scherverdünnungsfaktor (STF), Eta(0,05)/Eta(300) von 9,5 bis 16,0, vorzugsweise von 10,0 bis 14,5, wobei Eta(0,05rad/s) und Eta(300rad/s) die komplexen Viskositätswerte sind, die gemäß den ISO-Normen 6721-1 und 6721-10 bei einem Frequenzdurchlauf von 0,05 rad/s bzw. 300 rad/s bestimmt werden.

**11.** Gemischtes Polypropylen-Plastik-Gemisch gemäß einem der vorhergehenden Ansprüche liegt in Form von Granulat vor.

**12.** Extrudierter Gegenstand aus einem gemischten Polypropylen-Plastik-Gemisch nach einem der vorhergehenden Ansprüche.

**13.** Extrudierte Gegenstand nach Anspruch 12, welcher eine Folie ist.

**14.** Verwendung des gemischten Polypropylen-Plastik-Gemisches nach einem der Ansprüche 1 bis 11 zur Verpackung.

**Revendications**

**1.** Mélange de plastique mixte et de polypropylène ayant

(i) une densité déterminée selon DIN EN ISO 1183 de 900 à moins de 924 kg/m$^3$ ;
(ii) une teneur en fraction soluble (SF) déterminée selon l'analyse CRYSTEX QC dans la plage de 3,0 à 12,0 % en poids, dans lequel l'analyse CRYSTEX QC est effectuée sur la base de l'annexe B de ISO 6427 : 1992 (E) comme décrit dans la partie expérimentale de la spécification, de sorte que
(iii) ladite fraction soluble (SF) a une teneur en caoutchouc éthylène-propylène (EPR) comme exprimé par l'équation (2) inférieure à 7,0 % en poids, où l'EPR correspond à la fraction ayant une masse molaire supérieure à logM de 3,5 à 8 de la fraction soluble (SF) dans TCB à 35°C obtenue par analyse par chromatographie en fractionnement croisé (CFC)

$$EPR\ fraction\ in\ wt.-\% = \frac{\sum_{j=3.5}^{8} H_j}{\sum_{j=2}^{8} H_j} * SF \quad equation\ (2)$$

,

dans lequel Hj désigne la hauteur de signal à la valeur j de logM, et dans lequel l'analyse par chromatographie en fractionnement croisé (CFC) est effectuée comme décrit dans la partie expérimentale de la spécification ; et
(iv) ladite fraction soluble (SF) a une viscosité intrinsèque (iV(SF)) dans la plage de 1,10 à moins de 1,50 dl/g, de préférence de 1,25 à 1,45 dl/g, dans lequel la viscosité intrinsèque est déterminée par analyse CRYSTEX QC sur la base de l'annexe B de ISO 6427 : 1992 (E) comme décrit dans la partie expérimentale de la spécification ; et de sorte que
(v) le mélange de plastique mixte et de polypropylène a des résidus inorganiques comme mesuré par analyse de calcination (TGA) selon DIN ISO 1172 :1996 de 0,05 à 3,0 % en poids, de préférence de 0,05 à 2,5 % en poids, optionnellement de 0,5 à 2,0 % en poids par rapport au mélange de plastique mixte et de polypropylène ; et

dans lequel le mélange de plastique mixte et de polypropylène est un matériau recyclé.

**2.** Mélange de plastique mixte et de polypropylène selon la revendication 1, dans lequel le rapport entre le poids moléculaire de la fraction à faible teneur en polyéthylène cristallin (LCF-PE) comme observé lors de l'analyse par chromatographie en fractionnement croisé (CFC) dans la plage de 60 à 85°C (Mw LCF(60-85)) et le poids moléculaire du copolymère éthylène-propylène cristallin comme observé lors de l'analyse par chromatographie en fractionnement croisé (CFC) dans la plage de 103 à 109°C (Mw EP Copo (103-109)) est de 0,7 à moins de 1,4, et dans lequel l'analyse par chromatographie en fractionnement croisé (CFC) est effectuée comme décrit dans la partie expérimentale de la spécification.

**3.** Mélange de plastique mixte et de polypropylène selon la revendication 1 ou 2, dans lequel

la teneur en fraction à faible teneur en polyéthylène cristallin (LCF-PE) comme exprimé par l'équation (5) est inférieure à 7,0 % en poids, de préférence inférieure à 6,0 % en poids, dans lequel ladite teneur en LCF-PE est obtenue par analyse par chromatographie en fractionnement croisé (CFC)

$$LCF - PE = \frac{\sum_{i=85}^{89} \sum_{j=0.0185 \cdot i + 3.1538}^{8} H_{ij}}{\sum_{i=30}^{140} \sum_{j=2}^{8} H_{ij}} *100 \text{ (equation 5)}$$

dans lequel Hij désigne la hauteur de signal et i la température d'élution et j la valeur de logM, et dans lequel l'analyse par chromatographie en fractionnement croisé (CFC) est effectuée comme décrit dans la partie expérimentale de la spécification.

4. Mélange de plastique mixte et de polypropylène selon l'une des revendications précédentes, ayant un cisaillement oscillatoire à grande amplitude - facteur non linéaire [LAOS -NLF] (190°C, fréquence angulaire de 0,628 rad/s, déformation de 1000 %) supérieur à 1,5, de préférence supérieur à 1,5 à 3,0, de manière davantage préférée supérieur à 1,5 à 2,3, de sorte que

$$LAOS - NLF = \left| \frac{G_1'}{G_3'} \right|$$

de sorte que

$G_1'$ est le coefficient de Fourier du premier ordre
$G_3'$ est le coefficient de Fourier du troisième ordre, et
l'analyse de cisaillement oscillatoire à grande amplitude (LAOS) est effectuée comme décrit dans la partie expérimentale de la spécification.

5. Mélange de plastique mixte et de polypropylène selon l'une des revendications précédentes, dans lequel le mélange de plastique mixte et de polypropylène a un espace chromatique CIELAB (L*a*b*), mesuré selon DIN EN ISO 11664-4, de

- L* de 30,0 à 90,0 de préférence de 35,0 à 71,0 ;
- a* de -5,0 à 0,0 ;
- b* de 0,0 à moins de 15,0.

6. Mélange de plastique mixte et de polypropylène selon l'une des revendications précédentes ayant un indice de fluage (ISO1133, 2,16 kg ; 230°C) de 1,0 à 100,0 g/10 min, de préférence de 2,0 à 20,0 g/10 min, plus préférablement de 2,0 à 11,0 g/10 min et le plus préférablement de plus de 2,0 à 10,0 g/10 min.

7. Mélange de plastique mixte et de polypropylène selon l'une des revendications précédentes contenant une ou plusieurs, des substances suivantes :

a) polystyrène
b) polyamide-6
c) limonène comme déterminé en utilisant une microextraction en phase solide (HS-SPME-GC-MS)
d) acides gras comme déterminé en utilisant une microextraction en phase solide (HS-SPME-GC-MS).

8. Mélange de plastique mixte et de polypropylène selon l'une des revendications précédentes ayant une densité déterminée selon DIN EN ISO 1183 de 900 à 923 kg/m$^3$, de préférence de 905 à 922 kg/m$^3$, plus préférablement de 910 à 921 kg/m$^3$, et en particulier de 915 à 920 mg/m$^3$.

9. Mélange de plastique mixte et de polypropylène selon l'une des revendications précédentes ayant

une Eta(0,05 rad/s), 200°C de 2000 à 4300 Pa.s, de préférence de 2500 à 4000 Pa.s, et en particulier de 3000 à 4000 Pa.s, dans lequel Eta(0,05 rad/s) est la valeur de viscosité complexe déterminée selon les normes ISO 6721-1 et 6721-10 à un balayage de fréquence de 0,05 rad/s, et/ou
une Eta(300 rad/s), 200 °C de 200 à 280 Pa.s, de préférence de 210 à 275 Pa.s, et en particulier de 240 à 270 Pa.s, dans lequel Eta(300 rad/s) est la valeur de viscosité complexe déterminée selon les normes ISO 6721-1 et 6721-10 à un balayage de fréquence de 300 rad/s.

10. Mélange de plastique mixte et de polypropylène selon l'une des revendications précédentes ayant un facteur d'amincissement par cisaillement (STF), Eta(0,05)/Eta(300) de 9,5 à 16,0, de préférence de 10,0 à 14,5, dans lequel Eta(0,05 rad/s) et Eta(300 rad/s) sont les valeurs de viscosité complexes déterminées selon les normes ISO 6721-1 et 6721-10 à un balayage de fréquence de 0,05 radis et 300 rad/s, respectivement.

11. Mélange de plastique mixte et de polypropylène selon l'une des revendications précédentes qui est sous la forme de granulés.

12. Article extrudé fabriqué à partir du mélange de plastique mixte et de polypropylène selon l'une des revendications précédentes.

13. Article extrudé selon la revendication 12 qui est un film.

14. Utilisation du mélange de plastique mixte et de polypropylène selon l'une des revendications 1 à 11 pour un emballage.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018046578 A
- US 5767230 A

**Non-patent literature cited in the description**

- Polymer Handbook. Wiley, 1989
- **DEL HIERRO, P.** ; **ORTIN, A.** ; **MONRABAL, B.** Soluble Fraction Analysis in polypropylene. *The Column*, February 2014, 18-23
- **SINGH, G.** ; **KOTHARI, A** ; **GUPTA, V.** *Polymer Testing*, 2009, vol. 28 (5), 475
- **ZHOU, Z** ; **KUEMMERLE, R.** ; **QIU, X.** ; **REDWINE, D** ; **CONG, R.** ; **TAHA, A.** ; **BAUGH, D.** ; **WINNIFORD, B.** *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 1128
- **CHENG, H. N.** *Macromolecules*, 1984, vol. 17, 1950
- **WANG, W-J.** ; **ZHU, S.** *Macromolecules*, 2000, vol. 33, 1157
- **ORTIN A.** ; **MONRABAL B.** ; **SANCHO-TELLO J.** *Macromol. Symp.*, 2007, vol. 257, 13-28
- **L. WILD** ; **T.R. RYLE** ; **D.C. KNOBLAUCH** ; **I.R. PEAT**. *J. Polym. Sci, Polym. Phys.*, 1982, vol. 20, 441-455
- **ZHANG**. *Macromol Symp*, 2009, vol. 282, 111-127
- **W. YAU** ; **D. GILLESPIE**. *Polymer*, 2001, vol. 42, 8947-8958
- **MONRABAL**. Encyclopedia of Analytical Chemistry. John Wiley & Sons Ltd., 2000
- **NAKANO, Y.** ; **GOTO, J.** *Appl. Polym. Sci.*, 1981, vol. 26, 4217
- **W. YAU**. *Macromol. Symp*, 2007, vol. 257, 29-45
- **FALDI, J.B.P. SOARES**. *Polymer*, 2001, vol. 42, 3057-3066
- **ORTIN, B.** ; **MONRABAL, J** ; **SANCHO-TELLO**. *Macromol. Symp*, 2007, vol. 257, 13-28
- **LI PI SHAN** ; **D. GILLESPIE** ; **L. HAZLITT**. *Ecorep*, 2005
- **J. M. DEALY** ; **K. F. WISSBRUN**. Melt Rheology and Its Role in Plastics Processing: Theory and Applications. Van Nostrand Reinhold, 1990
- **S. FILIPE**. Non-Linear Rheology of Polymer Melts. *AIP Conference Proceedings*, 2009, vol. 1152, 168-174
- **M. WILHELM**. *Macromol. Mat. Eng*, 2002, vol. 287, 83-105
- **S. FILIPE** ; **K. HOFSTADLER** ; **K. KLIMKE** ; **A. T. TRAN**. Non-Linear Rheological Parameters for Characterisation of Molecular Structural Properties in Polyolefins. *Proceedings of Annual European Rheology Conference*, 2010, vol. 135
- **S. FILIPE** ; **K. KLIMKE** ; **A. T. TRAN** ; **J. REUSSNER**. Proceedings of Novel Non-Linear Rheological Parameters for Molecular Structural Characterisation of Polyolefins. *Novel Trends in Rheology*, 2011, vol. IV
- **K. KLIMKE** ; **S. FILIPE** ; **A. T. TRAN**. Non-linear rheological parameters for characterization of molecular structural properties in polyolefins. *Proceedings of European Polymer Conference, Granada, Spain*, 2011
- **HEINO, E.L** ; **LEHTINEN, A.** ; **TANNER J** ; **SEPPÄLÄ, J.** Rheological characterization of polyethylene fractions. *Theor. Appl. Rheol., Proc. Int. Congr. Rheol*, 1992, vol. 1, 360-362
- **HEINO, E.L.** The influence of molecular structure on some rheological properties of polyethylene. *Annual Transactions of the Nordic Rheology Society*, 1995
- Definition of terms relating to the non-ultimate mechanical properties of polymers. *Pure & Appl. Chem.*, 1998, vol. 70 (3), 701-754
- **BAFNA, S.S.** Is the Cross-Over Modulus a Reliable Measure of Polymeric Polydispersity?. *Journal of Applied Polymer Science*, 1997, vol. 63, 111-113
- **STEEMAN, P. A. M.** A numerical study of various rheological polydispersity measures. *Rheologica Acta*, 1998, vol. 37 (6), 583-592
- **ZEICHNER G. R.** ; **PATEL P. D.** A Comprehensive Evaluation of Polypropylene Melt Rheology. *Conference Proceeding, Chemical engineering for world development*, 1981, 333-337